# EUROPEAN PATENT APPLICATION

(11) **EP 0 883 265 A2**
(43) Date of publication of application: **09.12.1998**
(21) Application number: 98304357.1
(22) Date of filing: 02.06.1998
(51) Int. Cl.: H04L 12/46, H04L 12/56, H04L 29/06

(54) **Transmission equipment, network transmission system, and transmitting method**

(30) Priority: 02.06.1997 JP 143842/97; 14.01.1998 JP 5718/98
(71) Applicant: FUJITSU LIMITED, Kawasaki-shi, Kanagawa 211-8588 (JP)
(72) Inventor: Baba, Hidekazu, Nakahara-ku, Kawasaki-shi, Kanagawa 211 (JP); Chugo, Akira, Nakahara-ku, Kawasaki-shi, Kanagawa 211 (JP)
(74) Representative: Fenlon, Christine Lesley

(57) **Abstract**

When transmission of a frame including destination information (IP address) is relayed between a plurality of networks, route information corresponding to destination information included in a frame received from each network is selected in the route selecting section from route information registered in a first route storing section and a second route storing section, and the received frame is relayed and transmitted through the transfer path control section according to the route information.

## Description

### FIELD OF THE INVENTION

The present invention relates to a transmission equipment for constructing a high speed and large capacity backbone network by connecting a plurality of LANs (Local Area Networks) to each other, a network transmission system in which the transmission equipment is applied, and a transmitting method for realizing relaying as a backbone with the transmission equipment.

### BACKGROUND OF THE INVENTION

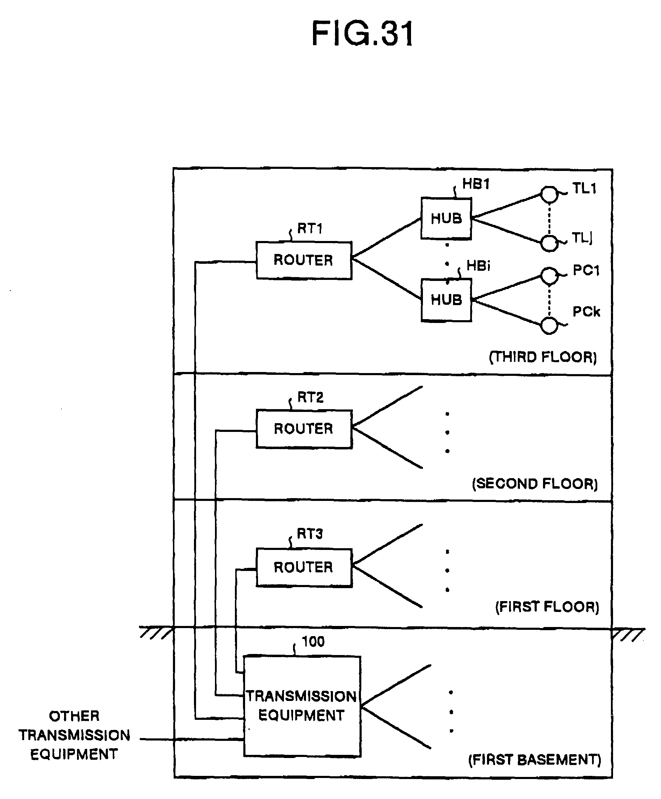

Fig. 31 is a block diagram showing a network transmission system in a general business organization. In the building shown in Fig. 31, a LAN is constructed by using each of the floors from the first basement up to the third floor. Routers RT1, RT2, and RT3 are installed on the third, second and first floors of the building respectively, and the routers RT1, RT2, and RT3 are connected to the transmission equipment 100 for a router functioning as a backbone installed on the first basement.

As for the system on each floor, a plurality of hubs HB1, ... HBi (i: natural number) is connected to the router RT1. A plurality of hubs now shown herein are connected also to each of the other routers RT2, RT3. Terminals TL1, ... TLj (j: natural number) of a server or a work station are bundled with the hub HB1, while terminals PC1, ... PCk are bundled with the hub HB2. Also for the first floor or the second floor, a router, hubs, and terminals are connected like on the third floor.

A transmission equipment 100 has a plurality of hubs or terminals connected thereto as devices slave thereto like the routers RT1, RT2, and RT3 on each floor, and also other transmission equipment are connected thereto.

Next description is made, as an example of operation, for a case where the terminal TL1 on the third floor transmits data to a terminal on the second floor in the network transmission system shown in Fig. 31. It is assumed therein that the used protocol is the TCP (Transmission Control Protocol)/IP (Internet Protocol) protocol.

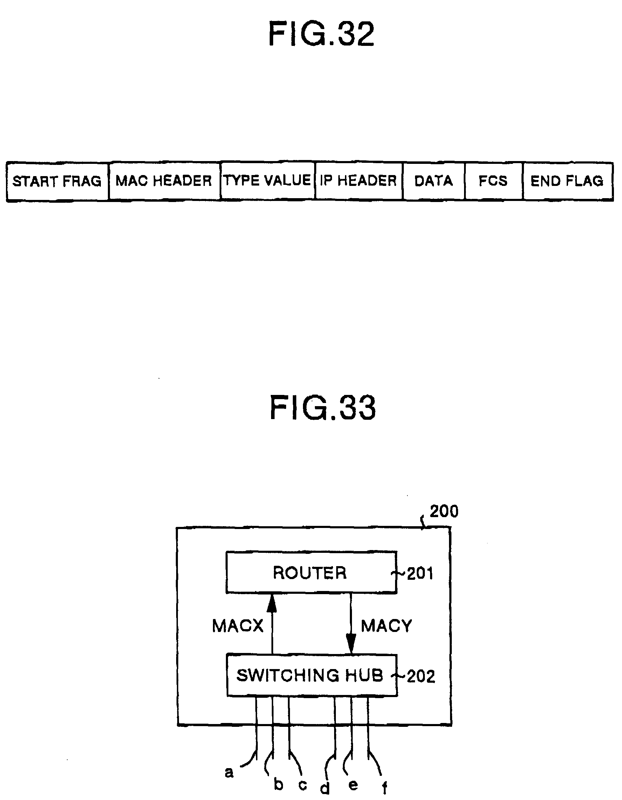

Fig. 32 is a view schematically showing a format of a frame (also called packet) in the TCP/IP Protocol. The frame comprises, as shown in Fig. 32, from the head to the end, a start flag indicating start of the frame, an MAC header defining destination MAC (Media Access Control) address, a transmitting MAC address, or others, a type value defining a protocol type, an IP header defining a destination IP address, a transmitting IP address or others, data, a frame check sequence (FCS) such as a check sum, and an end flag indicating an end of the frame.

Herein an MAC address and an IP address of the terminal TL1 at the transmitting site are MACA and IPA respectively and also an MAC address and an IP address at the receiver's site are MACB and IPB respectively. Further it is assumed herein that MAC addresses of the router RT1, transmission equipment 100, and router RT2 are MACC, MACD, and MACE, respectively.

At first the terminal TL1 prepares a frame according to the format shown in Fig. 32. Then, in the MAC header, an MAC address (MACC) of the router RT1 passed first when transmitting to a terminal as a destination for transmission is defined together with an MAC address (MACA) of the MAC header as a destination MAC address. Also in the IP header, an IP address (IPB) of a receiving terminal is defined together with an IP address (IPA) of the IP header.

When a frame is sent on a network from the terminal TL1, at first , the frame is received by the router RT1. This router RT1 extracts the IP header as well as the MAC header from the received frame. Further when the router RT1 confirms from the IP header that the transmitter is the terminal TL1 (IPA) and a receiver is a terminal having the IP address of IPB, the router RT1 rewrites the next MAC address for the MAC header to MACD for the transmission equipment 100. Thus the router RT1 transfers the frame with updated MAC header to the transmission equipment 100 as a backbone.

An operation for rewriting the MAC header is also executed in the subsequent transmission equipment 100 and router RT2. Namely, in the transmission equipment 100, the MAC address is rewritten from MACD to MACE, and in the router RT2 the MAC address is rewritten from MACE to MACB. As described above, in data transmission through a router, the MAC header is updated each time the data passes through a router.

In this network transmission system, as a large volume of traffic (volume of communication) is concentrated to the transmission equipment 100 from each floor, so that it is necessary to select a transmission equipment having a large capacity and a high processing speed.

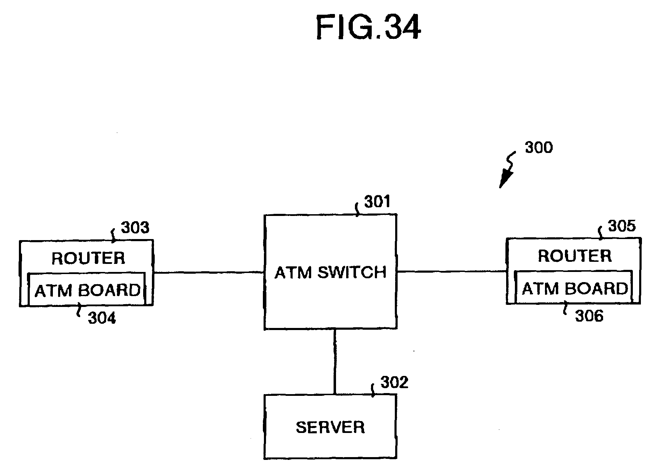

As a large capacity transmission equipment in which a plurality of routers are connected to each other, in addition to the transmission equipment 100 (router) described above, a combination of a switching hub and a router or a combination of an ATM (Asynchronous Transfer Mode) switch and a router can be enumerated. Fig. 33 is a block diagram schematically showing a transmission equipment comprising a combination of a switching hub and a router, and Fig. 34 is a block diagram schematically showing a transmission equipment comprising a combination of an ATM switch and a router.

The transmission equipment 200 shown in Fig. 33 has the configuration in which a router 201 and a switching hub 202 are connected to each other. The switching hub 202 executes bridging between transfer paths a, b, and c or between transfer paths d, e, and f, and also executes switching between the transfer paths a, b, c and transfer paths d, e, f. Namely, the switching hub 202 relays a layer 2 in the OSI (Open Systems Interconnection) layer. Namely, the switching hub 202 transmissively relays a frame flowing through a LAN by selecting a route according to the MAC address.

The router 201 receives a frame from the switching hub 202, rewrites data such as MAC address, TLL (Time to Live), check sum, and again returns the rewritten data to the switching hub 202 (for instance, by rewriting the MAC address from MACX to MACY). This router relays the layer 3 in the OSI layer. Namely, the router 201 received a frame flowing through the LAN, rewrite the frame, and relays the rewritten frame to another LAN by selecting a route according to the Ip address.

The transmission equipment 300 shown in Fig. 34 has the configuration in which a server 302 and routers 303, 305 are connected to the ATM switch 301. In Fig. 34, the router 303 located in the input side of the ATM switch 301 executes data transmission to the ATM switch 301 by dividing a frame into data units each with a short fixed length and called as a cell with an ATM board 304 incorporated therein. On the other hand, the router 305 located in the output side of the ATM switch 301 returns cells with an ATM board 306 incorporated therein to the frame and transmits the frame.

The ATM switch 301 relays the layer 1 in the OSI layer according to a cell flowing between the routers 303, 305. This ATM switch 301 selects a destination router (route) being assisted by the server 302 with destination information stored therein. Namely in the ATM switch 301, route selection is executed by an identifier specified to an ATM unitarily allocated thereto. In this example, a router 305 is used as the destination router.

In the network transmission system based on the prior art as described above, eve if a frame can be transmissively passed at the switching hub 202, a frame is rewritten each time the frame passes through the router 201, so that the processing speed as a flow inevitably lowers even though up to the layer 3 can functionally be covered advantageously. For this reason, there has been the problem that the performance is low as that of a backbone transmission equipment requiring a high processing speed. Substantial cost increase is required to solve this problem, so that realization of the solution has been difficult.

Even though transmissivity is obtained within a range of the ATM switch 301 like in the transmission equipment 300, the routers 303, 305 or the like connected to the ATM switch 301 take charge for the processing for conversion between a frame and a cell, so that cost for interface inevitably increases. For this reason, the transmission equipment 300 has nothing but the system configuration in which load is dispersed to devices around the ATM switch 301 to reduce a load to the ATM switch 301 itself, so that the system cost is relatively high.

### SUMMARY OF THE INVENTION

It is a first object of the present invention to provide, for the purpose to solve the problems in the prior art as described above, a transmission equipment in which an excellent cost performance for the apparatus as a whole can be realized without being restricted by the conventional type of transmitting technology based on OSI layers.

It is a second object of the present invention to provide, for the purpose to solve the problems in the prior art as described above, a network transmission system in which an excellent cost performance for the system as a whole can be realized by using a transmission equipment which can achieve the first object as described above.

It is a third object of the present invention to provide, for the purpose to solve the problems in the prior art as described above, transmitting method in which relay as a backbone can be realized without being restricted by the conventional type of transmitting technology based on OSI layer so that an excellent cost performance for the apparatus as a whole can be realized.

To solve the problems described above and achieve the first object, a transmission equipment according to the present invention with a plurality of networks connected thereto for executing communications using a frame including destination information for relaying frame transmission between said plurality of networks comprises a route storing unit for storing therein route information in correspondence to destination information for a receiver for frame transmission on the networks connected to the transmission equipment; a route selecting unit for selecting, when receiving a frame from each of the network, route information corresponding to destination information included in the received frame from route information stored in the route storing unit; and a relaying transmitter for relaying and transmitting the received frame according to the route information selected by the route selecting unit.

With the transmission equipment according to the present invention, when transmission of a frame based on a common frame format and including destination information is relayed between a plurality of networks, route information corresponding to destination information included in a frame received from each network from stored route information is selected, and the received frame is relayed an transmitted as it is according to the route information, so that the frame is transmissively relayed without the necessity to rewrite the entire frame and also a route can be confirmed only by checking the destination, and for this reason an excellent cost performance for the entire apparatus can be realized without being restricted by the conventional type of transmitting technology based on OSI layers.

A transmission equipment according to the present invention with one or a plurality of peripheral devices and a plurality of networks each for executing communications using a frame including destination information connected thereto for relaying frame transmission between the plurality of networks including the one or a plurality of peripheral devices, the transmission equipment comprises: a route storing unit for storing therein route information in correspondence to destination information on each of the networks; a compiling unit for recognizing, when a frame including control data transacted between transmission equipment and between a transmission equipment and a peripheral device is received from the one or the plurality of peripheral devices as well as from the plurality of networks, the control data from the received frame and compiling contents to be stored in the route storing unit according to the recognized control data; a route selecting unit for selecting route information corresponding to the route information included in the received frame including destination information from the route information stored in the route storing unit; and a relaying transmitter for relaying and transmitting the received frame including destination information as it is according to the route information selected by the route selecting unit.

With the transmission equipment according to the present invention, when transmission of a frame based on a common frame format and including destination information is relayed between a plurality of networks, control data transacted between transmission equipments and between a transmission equipment and a peripheral device is recognized according to a frame received from each peripheral device as well as each network; correspondence between destination information and route information on each network is compiled and stored according to the control data; route information corresponding to destination information included in a frame received from each network is selected from the stored route information; and the received frame is relayed and transmitted as it is according to the route information, so that a frame can transmissively be relayed without being degraded and also information for routing can be fetched from the frame, and for this reason information for routing can easily be compiled.

A transmission equipment according to the present invention with a plurality of networks connected thereto for executing communications using a frame including destination information for relaying frame transmission between the plurality of networks comprises a route storing unit for storing therein route information in correspondence to destination information on each of the networks; a compiling unit for recognizing, when a frame including a routing protocol is received from each of the network, the routing protocol from the received frame and compiling contents to be stored in the route storing unit according to the recognized routing protocol; a route selecting unit for selecting route information corresponding to destination information included in the received frame including destination information from the route information stored in the route storing unit; and a relaying transmitter for relaying and transmitting the received frame including destination information according to the route information selected by the route selecting unit.

With the transmission equipment according to the present invention, when transmission of a frame based on a common frame format and also including a destination information is relayed between a plurality of networks, a routing protocol is recognized according to a frame received from each network; destination information on each network is compiled and stored in correspondence to route information according to the routing protocol; route information corresponding to the destination information included in the frame received from each network is selected from the stored route information; and the received frame is relayed and transmitted as it is according to the route information, so that a frame can transmissively be relayed without causing degradation and information for routing can be fetched from the frame, and for this reason information for routing can easily be compiled.

A transmission equipment according to the present invention with one or a plurality of peripheral devices and a plurality of networks each for executing communications using a frame including destination information connected thereto for relaying frame transmission between the plurality of networks including the one or a plurality of peripheral devices comprises a route storing unit for storing therein route information in correspondence to destination information on each of the networks; a compiling unit for recognizing, when a frame including ARP is received from the peripheral device, an transmitting IP address of a peripheral device from the received frame and compiling contents to be stored in the route storing unit according to the recognized transmitting IP address for the peripheral device; a route selecting unit for selecting route information corresponding to the destination information included in the received frame including destination information from the route information stored in the route storing unit; and a relaying transmitter for relaying and transmitting the received frame including destination information according to the route information selected by the route selecting unit.

With the transmission equipment according to the present invention, when transmission of a frame based on a common frame format and also including destination information is relayed between a plurality of networks, a transmitting IP address of a peripheral device is recognized according to a frame received from the peripheral device; destination information on each network is compiled and stored in correspondence to route information according to the transmitting IP address; route information corresponding to the destination information included in a frame received from each network is selected from the stored route information; and the received frame is relayed and transmitted as it is according to the route information, so that a frame can transmissively be relayed without causing degradation, and information for routing can be fetched from the frame, and for this reason information for routing can easily be compiled.

In a transmission equipment according to the present invention, the compiling unit comprises an adding unit for adding, when route information relating to the recognized transmitting IP address is not stored in the route storing unit, the route information to the route storing unit; a measuring unit for measuring passage of a certain period of time in response to an adding operation of the adding unit; and an adding/deleting unit for stopping, when a frame including an ARP is received from the peripheral device according to the route information before the certain period of time measured by the measuring unit has passed, measurement by the measuring unit, and also for deleting, when it is measured by the measuring unit that the certain period of time has passed, contents added by the adding unit from the route storing unit.

With the transmission equipment according to the present invention, after route information relating to a transmitting IP address of a frame including a received ARP is added, when a frame including the ARP is received from a peripheral device according to the route information before a specified period of time passes, the measurement of time is stopped, and the added contents is deleted when the specified period of time has passed, so that a peripheral device not having been registered yet can be newly registered according to the ARP, and for this reason a host route can automatically be fetched and updated with the ARP frame.

In a transmission equipment according to the present invention, one or a plurality of other transmission equipments each equivalent to the transmission equipment are included in the plurality of networks, and the compiling unit reports a result of addition by the adding unit and contents deleted by the adding/deleting unit to the other transmission equipment or apparatuses.

With the transmission equipment according to the present invention, addition or deletion of newly added route information is reported also to other transmission equipments each having functions equivalent to those of the transmission equipment, so that stored contents on a shared communication route can accurately and rapidly be unified.

In a transmission equipment according to the present invention, the compiling unit sends a request type of frame including an ARP to the one or the plurality of peripheral devices before a time measured by the measuring unit reaches the specified period of time.

With the transmission equipment according to the present invention, a request type of frame including an ARP is sent to one or a plurality of peripheral devices before a measured time reaches a specified period of time, so that a frame including the ARP can actively be requested to a peripheral device before newly added route information is deleted, and for this reason it is possible to prevent route information to be added from being deleted carelessly.

In a transmission equipment according to the present invention, one or a plurality of other transmission equipment each equivalent to the transmission equipment are included in the plurality of networks, and the compiling unit updates, when route information relating to the recognized transmitting IP address is stored in the route storing unit, contents stored in the route storing unit according to a change of connection between the transmission equipment and the peripheral device based on the route information, and also reporting contents of updating to the other transmission equipment or apparatuses.

With the transmission equipment according to the present invention, when route information relating to a transmitting IP address of a received frame including the ARP has already been stored, the stored contents is updated according to change in connection between the transmission equipment and a peripheral device, and the updated contents is reported to other transmission equipment equivalent to the transmission equipment, so that, if, for instance, a peripheral device is under direct control by the other transmission equipment, the peripheral device is removed from objects for control by the transmission equipment, so that the route information may be deleted from the stored contents, or if a connecting position (port position) is changed in the transmission equipment, it is required only to change the route information, and for this reason automatic fetching and automatic updating of a host route with the ARP frame can be realized.

A transmission equipment according to the present invention with executing communications using a frame including destination information for relaying frame transmission between the plurality of networks comprises a switch engine for controlling a destination of the frame; a processing unit having a first table storing therein destination information on each of the networks in correspondence to a route information for a destination indicated by the destination information for receiving destination information from the switch engine by using the first table and also supplying route information corresponding to the destination information to the switch engine; and a management unit having a second table storing therein destination information on each of the networks in correspondence to a route for a destination indicated by the destination information; in the transmission equipment, the switch engine comprises an extracting unit for extracting destination information from the received frame when the frame is received from the networks; a first retrieving unit for retrieving route information corresponding to destination information extracted by the extracting unit from the route information stored in the first table; and a relaying transmitter for relaying and transmitting, when route information is obtained by the first retrieving unit, the received frame as it is according the route information, and also in the transmission equipment, the management unit comprises a second retrieving unit for retrieving, when route information is not obtained from the first retrieving unit, route information corresponding to the destination information extracted by the extracting unit from the route information stored in the second table in response to a request from the processing unit; and a registering unit for registering, when route information is obtained by the second retrieving unit, the route information in correspondence to the destination information extracted by the extracting unit.

With the transmission equipment according to the present invention, in the switch engine, when a frame based on a common format and including destination information is received from each network, route information corresponding to destination information included in a frame is retrieved from the first table in the processing unit, and when the route information is obtained, the received frame is relayed and transmitted as it is according to the route information; and in the management unit, if route information is not obtained in retrieval by the switch engine, retrieval for the route information is executed in the second table in the unit, and when the route information is obtained as a result of the retrieval, the route information is correlated to the destination information used in the retrieval and registered in the first table in the processing unit, so that, when required route information is obtained in the stage of retrieval using the first table, relay can be completed without causing the management unit to operate, and for this reason the relaying operation can be executed at a higher speed, and cost performance of the entire apparatus can further be improved.

In a transmission equipment according to the present invention, the switch engine comprises a recognizing unit for recognizing, when the frame including a routing protocol is received from the networks, the routing protocol from the received frame, while the management unit comprises a compiling unit for compiling the second table according to the routing protocol recognized by the switch engine.

With the transmission equipment according to the present invention, in the switch engine, when a frame including a routing protocol is received from each network, the routing protocol is recognized from the received frame, and in the management unit, the second table is compiled by the switch engine according to the recognized routing protocol, so that the first table is used only for the first route retrieval by the switch engine with work load to the processing unit reduced as much as possible, and for this reason transmissive relay of a frame is not delayed, and cost performance of the entire apparatus can further is improved.

A transmission equipment according to the present invention has one or a plurality of peripheral devices connected thereto, and the switch engine comprises a recognizing unit for recognizing, when the frame including an ARP is received from the peripheral device, a transmitting IP address for the peripheral device from the received frame, and the management unit comprises a compiling unit for compiling the second table according to the recognized transmitting IP address for peripheral device by the switch engine.

With the transmission equipment according to the present invention, in the switch engine, when a frame including the ARP is received from a peripheral device connected to a transmission equipment, a transmitting IP address of the peripheral device is recognized from the received frame, and in the management unit, the second table is compiled according to the transmitting IP address recognized by the switch engine, so that the first table is used only for the first route retrieval by the switch engine with a work load to the processing unit reduced as much as possible, and for this reason, transmissive relay of a frame is not delayed, and cost performance of the entire apparatus can further be improved.

To achieve the second object of the present invention, a network transmission system according to the present invention comprises a plurality of networks each for executing communication using a frame including destination information; and one or a plurality of transmission equipments with the plurality of networks connected thereto each for relaying frame transmission between the plurality of networks; in the network transmission system, the transmission equipment comprises a route storing unit for storing therein route information in correspondence to destination information for a receiver of frame transmission on the network connected to the transmission equipment; a route selecting unit for selecting, when the frame is received from the networks, route information corresponding to the destination information included in the received frame from the route information stored in the route information storing unit; and a relaying transmitter for relaying and transmitting the received frame according to the route information selected by the route selecting unit.

With the network transmission system according to the present invention, when transmission of a frame based on a common frame format and including destination information is relayed between a plurality of networks, in one or a plurality of transmission equipments with a plurality of networks connected thereto, route information corresponding to destination information included in a frame received from each network is selected from the stored route information, and the received frame is relayed and transmitted as it is according to the route information, so that a frame passing through a transmission equipment is transmissively relayed without the entire frame being rewritten, and also a route can be confirmed only by checking the destination, so that excellent cost performance of the entire system can be realized without being restricted by the conventional type of transmitting technology based on OSI layer.

A relaying network system according to the present invention comprises a plurality of networks each for executing communications using a frame including destination information; and one or a plurality of transmission equipment with a plurality of networks connected thereto each for relaying frame transmission between the plurality of networks; and in the relaying network system, the transmission equipment comprises a route storing unit for storing therein route information in correspondence to destination information on the networks; a table compiling unit for recognizing, when the frame including a routing protocol is received from the networks, the routing protocol from the received frame and compiling contents to be stored in the route storing unit according to the recognized routing protocol; a route selecting unit for selecting route information corresponding to the destination information included in the received frame including destination information from the route information stored in the route storing unit; and a relaying transmitter for relaying and transmitting the received frame including destination information as it is according to the route information selected by the route selecting unit within the plurality of networks.

With the network transmission system according to the present invention, when transmission of a frame based on a common frame format and including destination information is relayed between a plurality of networks, in the transmission equipment, a routing protocol is recognized according to a frame received from each network, destination information on each network is compiled and stored in correspondence to route information according to the routing protocol, route information corresponding to the destination information included in the frame received from each network is selected from the stored route information, and the received frame is relayed and transmitted as it is according to the route information, so that a frame can transmissively be relayed without being degraded and also information for routing can be fetched from the frame, and for this reason, information for routing in the system can easily be compiled in the transmission equipment.

In a network transmission system according to the present invention, the table compiling unit compiles, when the routing protocol recognized from the received frame is a routing protocol spontaneously sent from other relaying apparatus to the networks, contents to be stored in the route storing unit according to the routing protocol included in the received frame.

With the network transmission system according to the present invention, when relaying and transmitting a frame, if a routing protocol spontaneously sent from other transmission equipment is recognized from the received frame, the received frame is fetched, new destination information is generated, and the generated destination information is spontaneously sent to the other transmission equipment. For this reason, information for routing in the system can easily be compiled relaying the routing protocol between transmission equipments.

A network transmission system according to the present invention comprises a plurality of networks each for executing communications using a frame including destination information; and one or a plurality of transmission equipments with one or a plurality of peripheral devices and the plurality of networks connected thereto each for relaying frame transmission between the plurality of networks including the one or the plurality of peripheral devices; and in the network transmission system, the transmission equipment comprises a route storing unit for storing therein route information in correspondence to destination information on the networks; a table compiling unit for recognizing, when the frame including an ARP is received from the peripheral device, a transmitting IP address for the peripheral device from the received frame, and compiling contents to be stored in the route storing unit according to the transmitting IP address of the recognized peripheral device; a route selecting unit for selecting route information corresponding to the destination information included in the received frame including destination information from the route information stored in the route storing unit; and a relaying transmitter for relaying and transmitting the received frame including destination information according to the route information selected by the route selecting unit within the plurality of networks.

With the network transmission system according to the present invention, when a frame based on a common frame format and including destination information is relayed between a plurality of networks, in the transmission equipment, a transmitting IP address of a peripheral device is recognized according to a frame received from a connected peripheral device, destination information on each network is compiled and stored in route information according to the transmitting IP address, and route information corresponding to destination information in the frame received from each network is selected from the stored route information, and the received data is relayed as it is according to the route information, so that a frame can transmissively be relayed without being degraded and ihformation for routing can be fetched from the frame, and for this reason information for routing in the system can easily be compiled in the transmission equipment.

To achieve the third object, a transmitting method according to the present invention is a transmitting method for connecting a plurality of networks each for executing communications using a frame including destination information and relaying frame transmission between the plurality of networks comprises a first step for extracting, when the frame is received from the networks, destination information from the received frame; a second step of retrieving, by using the first table in which destination information on the networks is stored in correspondence to route information indicating a route for the destination indicated by the destination information, route information corresponding to the destination information extracted in the first step from the route information stored in the first table; a third step of relaying and transmitting, when route information is obtained in the second step, the received frame as it is according to the route information; a fourth step of retrieving, by using the second table provided separately from the first table in which the destination information on the networks is stored in correspondence to the route information indicating a route for the destination indicated by the destination information, when route information is not obtained in the second step, route information corresponding to the destination information extracted in the first step from the route information stored in the second table; and a fifth data of registering, when route information is obtained in the fourth step, the route information in the first table in correspondence to the destination information extracted in the first step.

With the transmitting method according to the present invention, when a frame based on a common frame format and including destination information is received from each network, route information corresponding to destination information in the frame is retrieved from the first table, and when the route information is obtained, the received frame is relayed and transmitted as it is from the route information, and on the other hand, when the route information is not obtained, the retrieval is executed in the second table, and when the route information is obtained as a result of this retrieval, the route information is registered in correspondence to the destination information used for retrieval in the first table, so that, when required route information is obtained in a stage of retrieval using the first table, the relaying operation can be finished in the stage, and with this feature the relaying operation is executed at a high speed, and for this reason the transmission equipment can execute relay as a backbone without being restricted by the conventional type of transmitting technology based on OSI layer so that excellent cost performance of the entire apparatus can be realized.

Other objects and features of this invention will become understood from the following description with reference to the accompanying drawings.

### BRIEF DESCRIPTION OF THE DRAWINGS

Fig. 1 is a functional block diagram functionally showing a transmission equipment according to Embodiment 1 of the present invention;
Fig. 2 is a view for explaining a flow of a frame in a network transmission system according to Embodiment 1;
Figs. 3A and 3B are views showing an example of port transmission when relaying an IP multicast frame, and Fig. 3A is an explanatory view for an example based on the conventional technology, while Fig. 3B is an explanatory view for Embodiment 1;
Figs. 4A and 4B are views for explaining a principle of frame relay, and Fig. 4A is an explanatory view for an example of the conventional technology, while Fig. 4B is an explanatory view for Embodiment 1;
Fig. 5 is a block diagram showing hardware of a transmission equipment according to Embodiment 1;
Fig. 6 is a view showing an example of memory configuration of a routing table according to Embodiment 1;
Fig. 7 is a view for conceptually explaining an IP switching function in the network transmission system according to Embodiment 1;
Fig. 8 is a view for explaining a flow of an RIP packet in the network transmission system according to Embodiment 1;
Figs. 9A and 9B are views showing an example of contents stored in an external routing table in the network transmission system according to Embodiment 1, and Fig. 9A is a view showing one example of an external routing table in the transmission equipment, while Fig. 9B is a view showing one example of the external routing table of other transmission equipment;
Fig. 10 is a view for conceptually explaining an internal RIP packet exchanging function in the network transmission system according to Embodiment 1;
Fig. 11 is a view for explaining a flow of an internal RIP packet in the network transmission system according to Embodiment 1;
Figs. 12A and 12B are views showing one example of contents stored in an internal routing table in the network transmission system according to Embodiment 1, and Fig. 12A is a view showing an example of the internal routing table of the transmission equipment, while Fig. 12B is a view showing an example of the internal routing table of other transmission equipment;
Fig. 13 is a view for conceptually explaining a method of compiling a routing table according to Embodiment 1;
Fig. 14 is a flow chart for explaining an IP relay frame processing according to Embodiment 1;
Fig. 15 is a view for explaining shift of a destination IP address as well as of a destination MAC address transferred through the network transmission system according to Embodiment 1;
Figs. 16A and 16B are views showing an example of contents stored in a routing table in the network transmission system according to Embodiment 1, and Fig. 16A is a view showing an example of the routing table in a transmission equipment, while Fig. 16B is a view showing an example of the routing table in other transmission equipment;
Figs. 17A and 17B are views showing an example of contents stored in an IP cache table in the network transmission system according to Embodiment 1, and Fig. 17A is a view showing an example of the IP chase table of a transmission equipment, while Fig. 17B is a view showing an example of the IP cache table in other transmission equipment;
Figs. 18A and 18B are views showing an example of contents stored in a routing table of a router connected to a transmission equipment in the network transmission system according to Embodiment 1;
Fig. 19A is a view showing a header format of an ARP, Fig. 19B is a view showing an example of a format of an ARP request frame, and Fig. 19C is a view showing an example of a format of an ARP response frame;
Fig. 20 is a functional block diagram functionally showing a transmission equipment according to Embodiment 2 of the present invention;
Fig. 21 is a view for explaining a flow of a frame in a network transmission system according to Embodiment 2;
Fig. 22 is a view for explaining a principle of relay of a received frame according to Embodiment 2;
Fig. 23 is a block diagram showing hardware of the transmission equipment shown in Fig. 20;
Fig. 24 is a view for conceptually explaining an ARP transmitting/receiving function of a terminal in the network transmission system according to Embodiment 2;
Fig. 25 is a flow chart for explaining a processing for receiving an ARP frame according to Embodiment 2;
Fig. 26 is a view for explaining a relation between a host route registration table and an internal routing table in the network transmission system according to Embodiment 2;
Fig. 27 is a view for conceptually explaining an ARP transmitting/receiving function of a transmission equipment in the network transmission system according to Embodiment 2;
Fig. 28 is a flow chart for explaining the processing for transmitting an ARP frame according to Embodiment 2;
Fig. 29 is a view for conceptually explaining a routing table compiling function of a transmission equipment in the network transmission system according to Embodiment 2;
Fig. 30 is a view for explaining a flow of routing table compiling operations according to Embodiment 2;
Fig. 31 is a block diagram showing a network transmission system in an ordinary business organization;
Fig. 32 is a view schematically showing a format of a frame used in the TCP/IP protocol;
Fig. 33 is a block diagram schematically showing a transmission equipment comprising a combination of a switching hub and a router each based on the conventional technology; and
Fig. 34 is a block diagram schematically showing a transmission equipment comprising a combination of an ATM switch and a router each based on the conventional technology.

### DESCRIPTION OF THE PREFERRED EMBODIMENTS

Next detailed description is made for the transmission equipment, a network transmission system, and a transmitting method each according to the present invention with reference to preferred embodiments of the present invention.

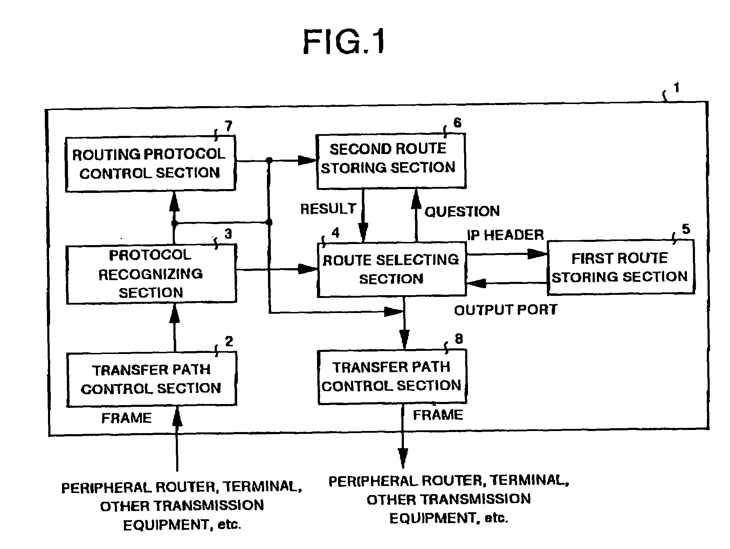

At first description is made for the basic principle in Embodiment 1 of the present invention. Fig. 1 is a functional block diagram functionally showing a transmission equipment according to Embodiment 1 of this invention. A transmission equipment 1 shown in Fig. 1 comprises a transfer path control section 2, a protocol recognizing section 3, a route selecting section 4, a first route storing section 5, a second route storing section 6, a routing protocol control section 7, and a transfer path control section 8. It should be noted that a frame format used in this network transmission system is the same as that shown in Fig. 32.

The transfer path control sections 2, 8 are connected to a plurality of LANs (a peripheral router, other transmission equipment having the same function, slave devices under control by the transmission equipment), and the transfer path control section 2 receives a frame on each LAN, while the transfer path control section 8 transmits a frame to an LAN having the route selected in the route selecting section 4.

The protocol recognizing section 3 recognizes a frame received through the transfer path control section 2, and determines whether the type is a routing protocol (such as RIP [Routing Information Protocol]), OSPF (Open Shortest Path First), or ordinary data (a file as an object to be relayed). This protocol recognizing section 3 sends out, when a routing protocol is recognized according to a received frame, the received frame to both the routing protocol control section 7 and the route selecting section 4, and when ordinary data is recognized, the protocol recognizing section 3 sends the received frame only to the route selecting section 4. It should be noted that, when the received frame is a routing protocol, routing information is included in the frame.

The route selecting section 4 extracts an IP header from the received frame, searches the first route storing section 5 according to destination information for the layer 3, namely an IP address as a key, receives the route information obtained through the retrieval, namely an output port, and sends the received frame as it is to a transfer path (transfer path control section 8) corresponding to the output port.

The first route storing section 5 is a routing table in which an IP address indicating a destination of each LAN and an output port indicating a route for output are stored in the mutual correspondence, and outputs an output port in response to an input of an IP address. The second route path storing section 6 is, like the first route storing section 5 described above, a routing table in which an IP address for the layer 3 indicating a destination for each' LAN and an output port indicating a route for output are stored in the mutual correspondence, and is used when an output port corresponding to the IP address can not be obtained in the first route storing section 5.

The routing protocol control section 7 checks a received frame, extracts routing information therefrom, and builds up (newly prepares, or changes) correspondence between an IP layer and an output port in the second route storing section 6 according to the routing information.

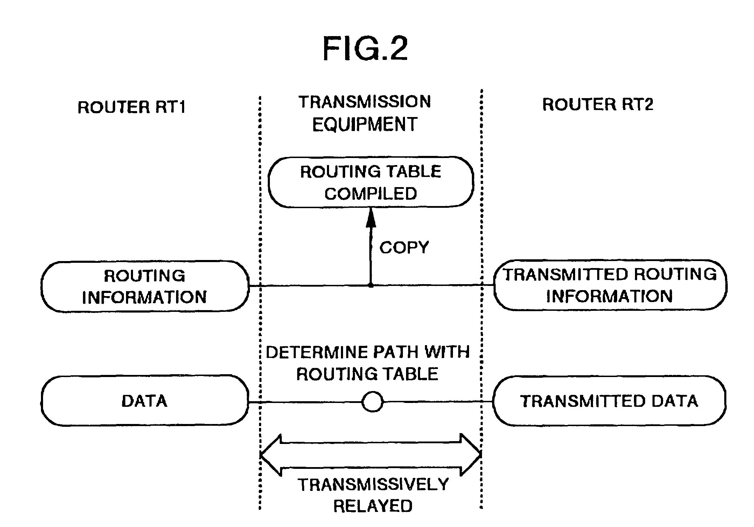

Then description is made for operations in this embodiment with reference to the functional blocks shown in Fig. 1. Fig. 2 is a view for explaining a flow of a frame in the network transmission system according to Embodiment 1. The following description assumes a case where the transmission equipment 1 is installed in place of a transmission equipment 100 in the state where the network transmission system shown in Fig. 31 is connected thereto. Accordingly, for convenience of description, it is assumed herein that routers RT1, RT2 are connected to the transmission equipment 1 as shown in Fig. 2.

Next description is made for a case where a received frame is ordinary data (a frame as an object to be relayed). When ordinary data (a frame as an object to be relayed) is transferred from the router RT1 through the transmission equipment 1 to the router RT2, the frame sent out from the router RT1 is at first received by the transmission equipment 1. In this transmission equipment 1, as the received frame is ordinary data, it is determined by the protocol recognizing section 3 that the received frame is ordinary data. In this case, a routing table in the first stage, namely the first route storing section 5 is searched by the route selecting section 4 using an IP address of the received frame as a key.

In the route selecting section 4, as a result of retrieval, if registration of an output port corresponding to the IP address is recognized, the received frame is sent through the transfer path control section 8 to the router RT2 so that the received frame can be transferred through a transfer path (LAN for the router RT2) corresponding to the output port. In this step, as shown in Fig. 2, the ordinary data sent from the router RT1 is transferred to the router RT2 by being transmissively relayed through the transmission equipment.

When a desired output port is not obtained as a result of retrieval in the first route storing section 5, an output port corresponding to the IP address is obtained in the second state by searching in the second route storing section 6. In this step, a relation between the IP address which could not be obtained in the first route storing section 5 and an output port corresponding thereto is routing information not having been stored in the first route storing section 5, so that the relation is newly registered in the first route storing section 5.

Next description is made for a case when the received frame is a routing protocol sent from an existing apparatus (peripheral devices such as a router or a terminal). When a routing protocol (routing information) is transferred from the router RT1 through the transmission equipment I to the router RT2, like in the case of ordinary data described above, the frame sent from the router RT1 is at first received by the transmission equipment 1. In this transmission equipment 1, as the received frame is a routing protocol, it is determined from a type value in the frame by the protocol recognizing section 3 that the received frame is a routing protocol.

In this case, the received frame is outputted through the protocol recognizing section 3 to both the routing protocol control section 7 and the route selecting section 4. The received frame outputted to the route selecting section 4 is, unlike in a case of the operation for relaying ordinary data described above, sent to all transmission routes excluding the received route, so that the received frame is sent to the router RT2. On the other hand, when the received frame is sent to the routing protocol control section 7, a routing table in the second route storing section 6 is compiled (newly prepared, or changed) from the routing protocol in the received frame, as shown in Fig. 2, under controls by the routing protocol control section 7.

When any change occurs in a table in the second route storing section 6, the routing protocol control section 7 deletes registered contents equivalent to the changed section from the routing table in the first route storing section 5 for correspondence to contents registered in the first route storing section 5. Thus, contents registered in the second route storing section 6 can immediately be reflected to the first route storing section 5. The word of "reflection" herein means that old registered contents already having been changed in the second route storing section 6 is not left in the first route storing section 5.

As described above, not only a routing protocol (routing information) is transmissively relayed, but a routing table is compiled by acquiring (copying) the routing protocol in the transmission equipment 1 itself when relaying a frame, and the function like this is not provided by any type of switching hub capable of transmissively relaying a frame. In contrast, the existing router can compile a routing table from a routing protocol when relaying a frame, but does not have a function to transmissively relay a frame, so that the performance becomes inevitably lower.

Next description is made for a case where the received frame is a routing protocol transmitted from a transmission equipment having the configuration and functions similar to those of the transmission equipment 1. As a method of distinguishing a routing protocol sent from any existing apparatus from that sent from a transmission equipment equivalent to the transmission equipment 1, the following two ways (1) and (2) are conceivable.
(1) A protocol number (such as a port number in UDP (User Datagram Protocol)in a case of IP) may be differentiated from that in an ordinary routine protocol.
(2) All the preset destination information (e.g., IP address) for the layer 3 in all transmission equipment each equivalent to the transmission equipment 1 are previously checked, and when a frame including the destination information as a transmitting side is received, a routing table is compiled regarding the frame as a routing protocol from a transmission equipment equivalent to the transmission equipment 1, and in this case the frame is rewritten and transferred to the next transmission equipment. This rewriting operation is executed according to the same processing sequence as that in any existing router.

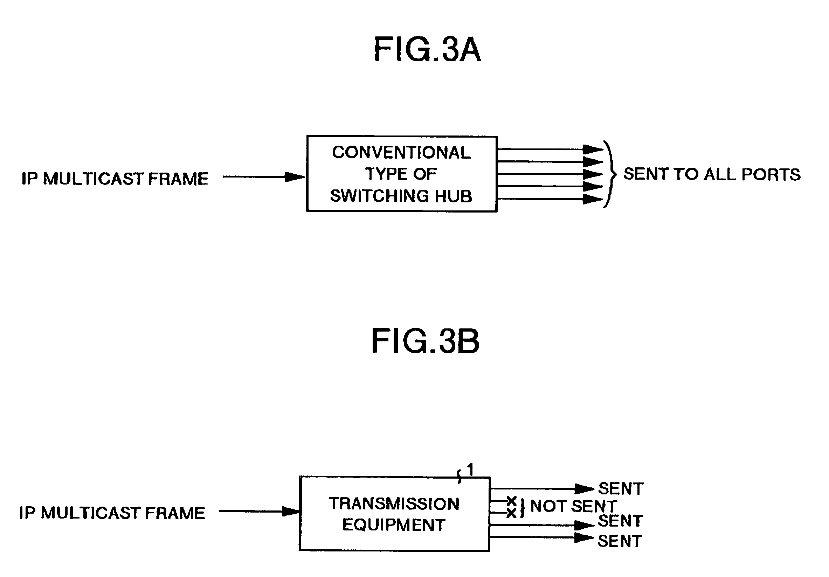

Next IP multi-casting between switch hubs each based on the conventional technology is compared to that between transmission equipments according to the present invention. Figs. 3A and 3B show an example of transmission of an IP multicast frame to a port, and Fig. 3A is an explanatory view for the conventional technology, while Fig. 3B is an explanatory view showing Embodiment 1 of the present invention.

In the conventional type of switch hub, an MAC address in the received IP multicast frame is for broadcast, so that the output is simultaneously set to all the ports (for instance, to 5 ports) (Refer to Fig. 3A) . In contrast, in the transmission equipment 1 described above, output ports are selected according to an IP address in the received multicast frame, so that the output is sent only to the required multicast group (for instance, 3 output ports among 5 ones) (Refer to Fig. 3B).

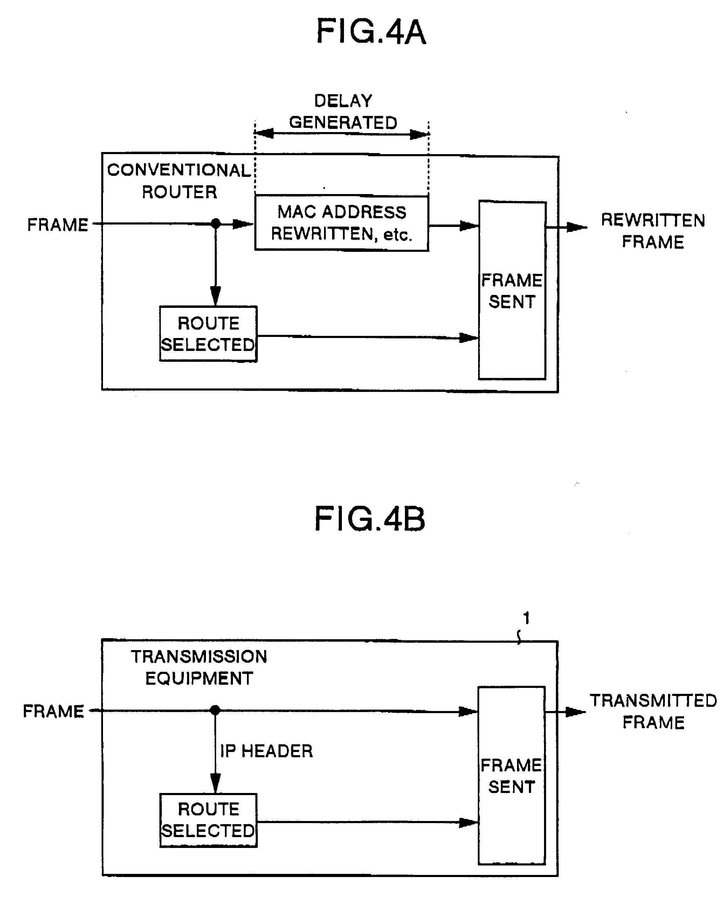

Further a principle of relay between conventional type of routers is compared to that between transmission equipments according to the present invention. Figs. 4A and 4B show a principle of an operation for relaying a frame, and Fig. 4A is an explanatory view showing a case based on the conventional technology, while Fig. 4B is an explanatory view for Embodiment 1 of the present invention.

In the conventional type of routers, such operations as rewriting an MAC address, subtracting TTL, or rewriting a checksum are executed before a route is selected according an IP header in a received frame and the frame is transmitted, so that delay is generated, which makes it impossible to relay a frame at a high speed (Refer to Fig. 4A). In contrast, in the transmission equipment 1 described above, when a route is selected according to an IP header in a received frame, the received frame is sent as it is, so that the delay as shown in Fig. 4A is never generated, and a frame can transmissively be relayed at a high speed (Refer to Fig. 4B).

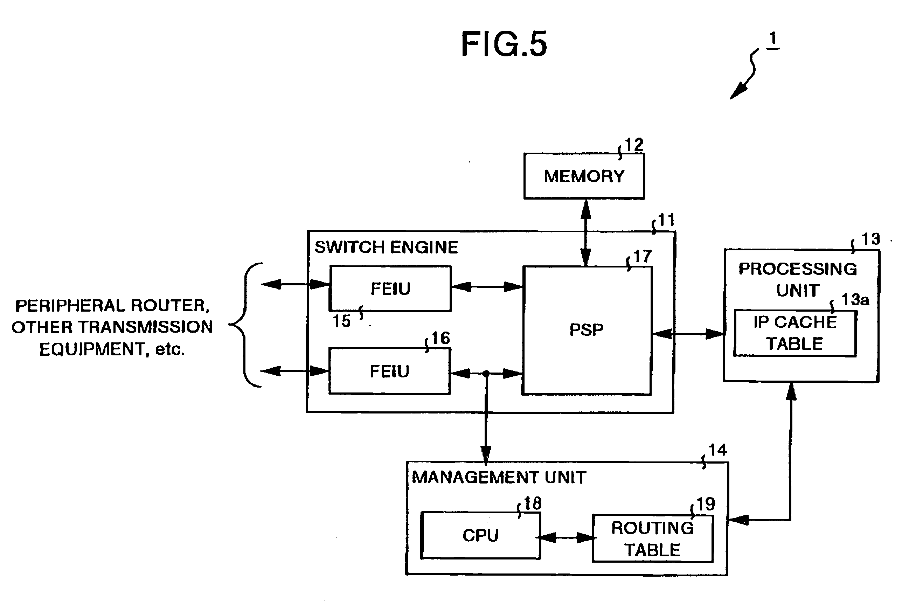

Next description is made for this Embodiment 1 with reference to the hardware. Fig. 5 is a block diagram showing hardware of the transmission equipment 1 described above. The transmission equipment 1 shown in Fig. 5 has the configuration in which a memory 12 for temporally storing therein a received frame, a processing unit 13 for executing retrieval with a routing table at a hardware level, and a management unit 14 executing retrieval with a routing table at a software level are connected to a packet switch engine (described as switch engine hereinafter) 11. Herein description is made for a case where the present invention is applied to Ethernet.

The switch engine 11 comprises a high speed Ethernet interface unit (described as FEIU (Fast Ethernet Interface Unit) hereinafter) 15 in the receiving side, an FEIU 16 in the transmitting side, and a packet switch processor (described as PSP (Packet Switch Processor)) 17.

The FEIUs 15, 16 are connected to a plurality of LANs based on the Ethernet, and have a function equivalent to that in the transfer path control sections 2, 3 in the functional block shown in Fig. 1 respectively. A PSP 17 is connected to the FEIUs 15, 16, memory 12, processing unit 13, as well as to the management unit 14, and controls the entire operations for relaying a frame. This PSP 17 has functions equivalent to the protocol recognizing section 3 and to the route selecting section 4 in the functional block shown in Fig. 1.

This PSP17 provides controls over operations for writing and reading a received frame to and from the memory 12, retrieval of route information by using an IP cache table 13a (equivalent to the routing table in the first stage) by the processing unit 13, compiling of a routing table 19 (equivalent to the routing table in the second stage) in the management unit 14 by collaborating with the management unit 14 or other operations.

The memory 12 is a large capacity storage unit for writing and reading received data thereto and therefrom under control by the PSP 17 in the switch engine 11. The processing unit 13 has the IP cache table 13a compiled so that route information can be retrieved using destination information of a received frame (IP address) as a key, and also has a function equivalent to the first route storing section 5 in the functional block in Fig. 1. This processing unit 13 issues, when required route information can not be obtained in route retrieval in the IP cache table 13a according to a request by PSP 17, an inquiry to the management unit 14, and registers, if there is the required route information in the routing table 19, the route information in correspondence to the destination information used as a key.

The management unit 14 has a CPU 18 and a routing table 19 freely updatable and compiled in the apparatus, and the CPU 18 and routing table 19 have the functions equivalent to the routing protocol control section 7 and second route storing section respectively in the functional block in Fig. 1. This management unit 14 compiles (newly prepares, or changes) the routing table 19 under control by the CPU 18 according to a request by the PSP 17, or supplies routing information short in the IP cache table 13a according to a request by the processing unit 13. It should be noted that the CPU 18 also provides controls for deleting routing information to be deleted or changed according to updating of the routing table 19 from the IP cache table 13a.

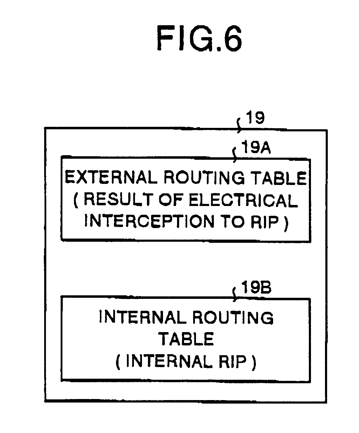

Next description is made for the routing table 19. Fig. 6 is a view showing an example of memory configuration of the routing table 19. The routing table 19 comprises, as shown in Fig. 6, an external routing table 19A compiled according to routing information copied in relay, namely a result of electrical interception to RIP, and an internal routing table compiled according to routing information exchanged between the transmission equipment 1 according to this Embodiment 1 and a transmission equipment having functions equivalent to the transmission equipment 1, namely the internal RIP.

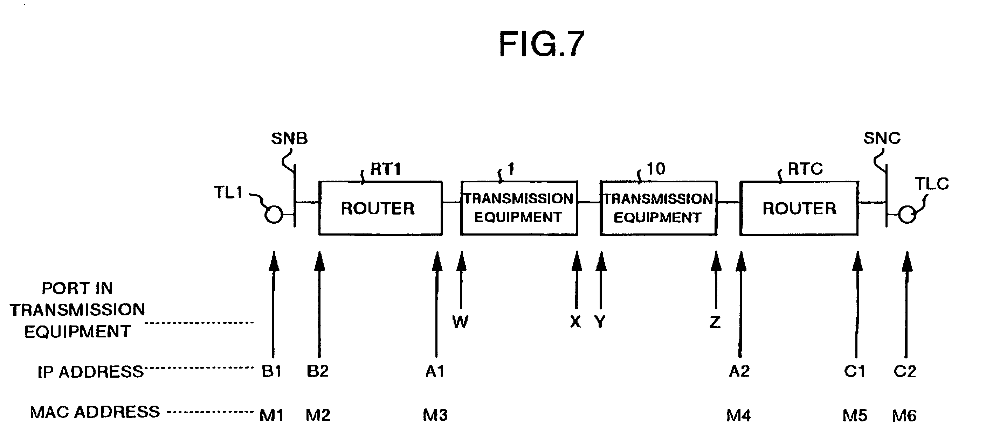

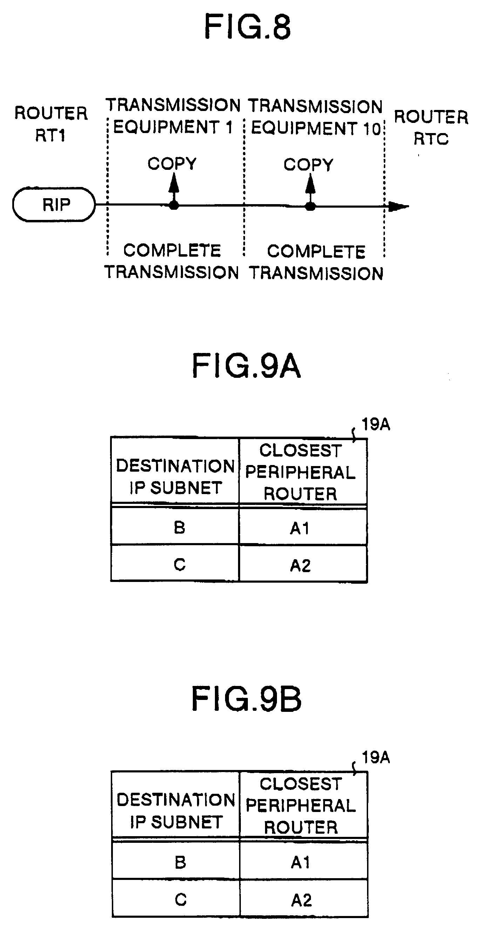

Herein description is made for operations for automatically compiling the external routing table 19A. This external routing table 19A is automatically compiled by electrical interception (firm function) by the RIP packet sent from a peripheral router. Fig. 7 is a view conceptually explaining the IP switching function in the network transmission system according to Embodiment 1, Fig. 8 is a view for explaining a flow of an RIP packet in the network transmission system, and Fig. 9 is a view showing an example of contents stored in the external routing table 19A in the network transmission system.

The network transmission system shown in Fig. 7 has the configuration in which the transmission equipment 10 having the configuration and functions similar to the transmission equipment 1 is connected to the transmission equipment 1. Connected to the transmission equipment 1 is a network having the same connective relation as that in the network transmission system shown in Fig. 31, and connection of the router RT1 in the side of the subnet SNB is shown as a representative example thereof. Also a network transmission system having the same configuration as that of the transmission equipment 1 is connected to the transmission equipment 10, and connection of the router RTC in the side of the subnet SNC is shown as an example thereof. It should be noted that connection of the terminal TL1 is connected as an example thereof in the subnet SNB and also connection of the terminal TLC is shown as an example thereof in the subnet SNC.

In the transmission equipment 1, "W" and "X" are assigned to a port in the side of the router RT1 and that in the side of the transmission equipment 10 respectively. As for IP addresses of the devices, to describe according to the transfer direction from the terminal TL1 to the terminal TLC, "B1" is assigned to the terminal device TL1, "B2" and "A1" to the router RT1, "A2" and "C1" to the router RTC, and "C2" to the terminal TLC respectively. Further as for MAC addresses for the devices, also to describe in the transfer direction from the terminal TL1 to the terminal TLC, "M1" is assigned to the terminal device TL1, "M2" and "M3" to the router RT1, "M4" and "M5" to the router RTC, and "M6" to the terminal TLC respectively.

In the system described above, when an RIP is transferred from the router RT1 in the side of subnet SNB to the router RTC in the side of subnet SNC, as shown in Fig. 8, the RIP packet sent from the router RT1 completely transmits the transmission equipment 1 and then the transmission equipment 10 and at the same time is electronically intercepted, thus copied and reserved in the transmission equipments 1 and 10. On the contrary, also when the RIP is transferred from the router RTC in the side of subnet SNC to the router RT1 in the side of subnet SNB, complete transmission and electronic interception are executed in the transmission equipments 10 and 1.

Herein description is made for a case when an RIP is electronically intercepted and copied into a routing table in the transmission equipments 1, 10. An IP address of a peripheral router closest in the side of subnet B and in the side of subnet C in the transmission equipment 1 in the external routing table 19A in the transmission equipment 1. Namely, as shown in Fig. 9A, the IP address "A1" of the router RT1 is stored in the side of subnet SNB, while the IP address "A2" of the router RTC is stored in the side of subnet SNC.

In the external routing table 19A in the transmission equipment 10, an IP address of a peripheral router closest in the side of subnet B and in the side of subnet C in the transmission equipment 10. Namely as shown in Fig. 9B, an IP address "A1" of the router RT1 is stored in the side of subnet SNB and an IP address "A2" of the router RTC is stored in the side of subnet SNC.

As described above, in a peripheral router, it is possible to declare with an RIP packet with how many pops it is possible to reach all the destination IP subnets (such as the subnet SNB or subnet SNC as described above) on the network from the peripheral router.

In the transmission equipments 1, 10, it is possible to determine which is the closest peripheral router for all the destination IP subnets on the network by copying and reserving an RIP packet with electronic interception, when relaying, and checking the copy. A routing table is automatically compiled by reflecting the result to the external routing table 19A.

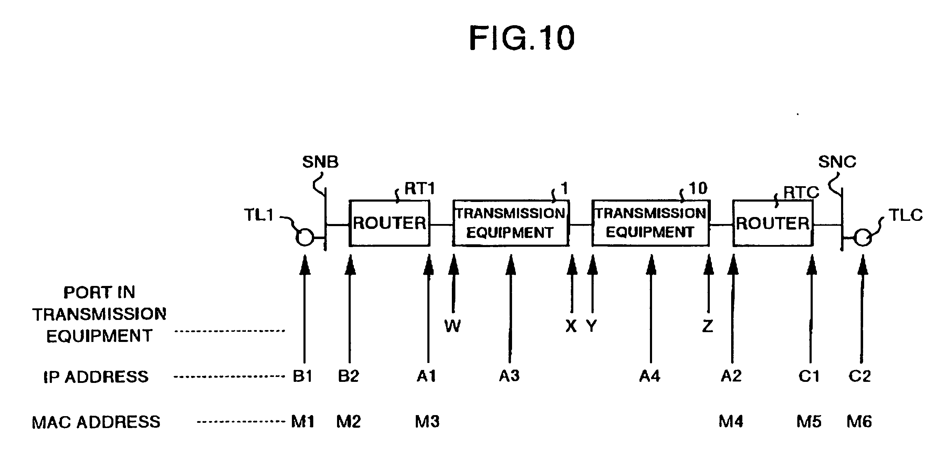

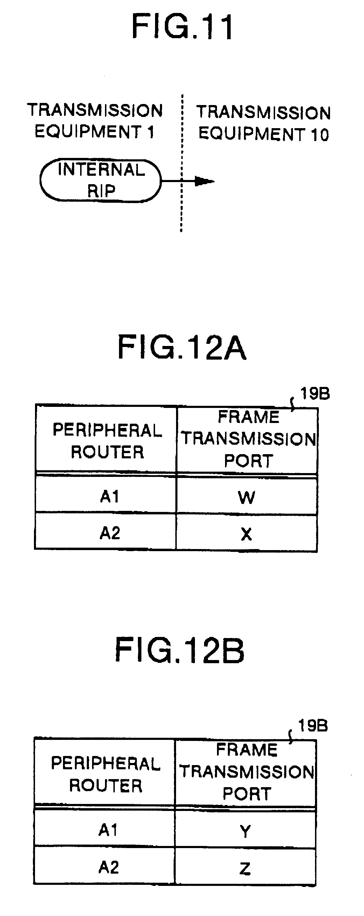

Next description is made for operations for automatically compiling an internal routing table 19B. This internal routing table 19B is automatically compiled by means of internal RIP packet exchange (firm function) between the relating apparatus 1 and a transmission equipment having the same functions as those of the transmission equipment 1. Fig. 10 is a view conceptually explaining the external RIP package exchanging function in the network transmission system, Fig. 11 is a view for explaining a flow of an internal RIP packet in the network transmission system, and Figs. 12A and 12B are views showing an example of contents stored in the internal routing table 19B in the network transmission system.

When the internal routing table 19B is automatically compiled, as shown in Fig. 10, in the network transmission system shown in Fig. 8 above, IP addresses "A3" and "A4" are assigned to the transmission equipments 1, 10, respectively. However, the IP addresses "A3", "A4" are information for internal communications which can not be seen from the peripheral router and is applicable only in the transmission equipments 1, 10 and those having the same configuration and functions as those of the transmission equipments 1, and 10.

In the network transmission system shown in Fig. 10, for instance, an internal RIP packet sent from the transmission equipment 1 to the transmission equipment 10 is transacted only between equivalent transmission equipments. For this internal RIP packet, if a type value in a frame format shown in Fig. 32 is defined so that it is differentiated from an ordinary IP, it is recognized by the PSP 17, when the internal RIP packet is received by the transmission equipments 1, 10 or other transmission equipments, that the internal RIP packet is an internal RIP.

Herein, description is made for a case where copying from an internal RIP packet to a routing table is executed in the transmission equipments 1, 10. In the internal routing table 19B in the transmission equipment 1, numbers of frame transmission ports as routes to the closest peripheral routers in the side of subnet B and in the side of subnet C in the transmission equipment 1 are stored. Namely, as shown in Fig. 12A, a frame transmission port number "W" is stored for an IP address A1 of the peripheral router RT1, and an a frame transmission port number "X" is stored for an IP address A2 of the peripheral router RTC.

In the internal routing table 19B of the transmission equipment 10, numbers of frame transmission ports as routes fir the closest routers in the side of subnet B and in the side of subnet C in the transmission equipment 10. Namely, as shown in Fig. 12B, a frame transmission port number "Y" is stored for an IP address A1 of the peripheral router RT1, while a frame transmission port number "Z" is stored for an IP address A2 of the peripheral router RTC.

As described above, in the transmission equipments 1, 10 and those equivalent to the transmission equipments 1, 10, it is possible to declare with an internal RIP packet with how many pops it is possible to reach all routers on the network from the transmission equipment.

In the transmission equipments 1, 10, it is possible to determine, when relaying, by receiving an internal RIP packet which is the closest route for all peripheral routes on the network. A routing table is automatically compiled by reflecting the result to the internal routing table 19B.

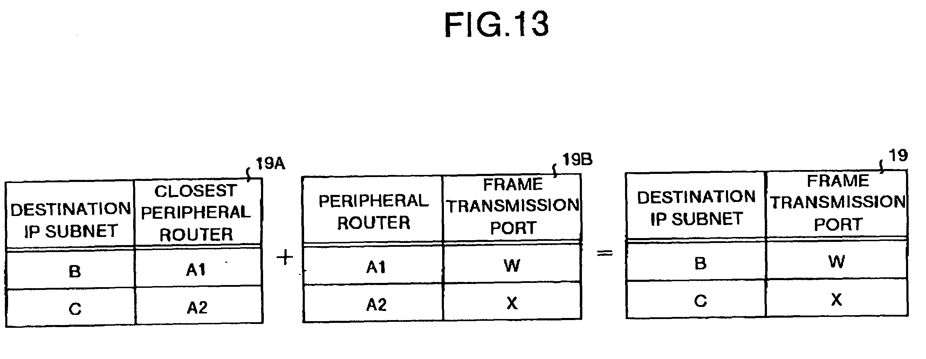

Then description is made for a method of compiling the routing table 19. Fig. 13 is a view conceptually explaining a method of compiling the routing table 19 in Embodiment 1 of the present invention. The routing table 19 is compiled with the external routing table 19A and the internal routing table 19B each automatically compiled as described above.

Herein, for instance, in the routing table 19 of the transmission equipment 1 (Description is not made for the transmission equipment 10 because the configuration is identical), as shown in Fig. 13, the external routine table 19A (Refer to Fig. 9A) and internal routing table 19B (Refer to Fig. 12A) are correlated to each other with the IP addresses of peripheral routers. As a method of using this table, for instance, when transferring a frame from the transmission equipment 1 to the subnet SNB, if route information is not retrieved in the IP cache table 13a, at first route information is retrieved in the external routing table 19A, and as a result an IP address of a peripheral router closest in the side of subnet SNB becomes "A1".

As described above, when route information is obtained as a result of retrieval in the external routing table 19A, then route information is retrieved in the internal routing table 19B. As a result, the frame transmission port number "W" is obtained from this IP address "A1". Thus, as shown in Fig. 13, the frame transmission port number "W" is obtained for the destination IP subnet B (subnet SNB).

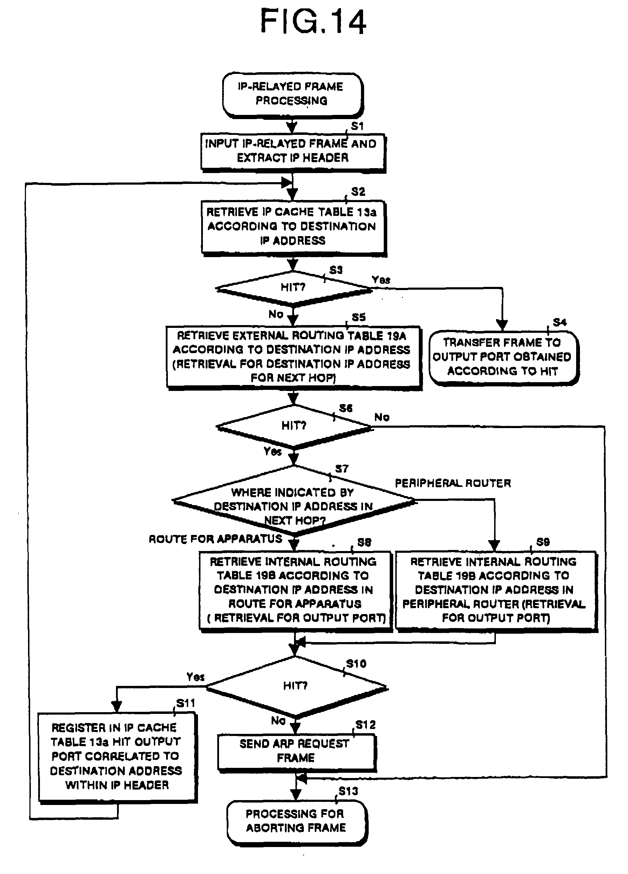

Next description is made for operations with reference to hardware configuration of the transmission equipment 1 shown in Fig. 5. Fig. 14 is a flow chart illustrating the IP-relayed frame processing in Embodiment 14.

When the IP-relayed frame processing is started and a frame (IP-relayed frame) is received by the transmission equipment 1, at first an IP header is extracted by the PSP 17 from the received frame (step S1). Then a destination IP address is fetched from the extracted IP header, and the IP cache table 13a in the processing unit 13 is retrieved using the destination IP address as a key (step S2). As a result of retrieval, when required route information (output port) is hit (step S3), the frame received at the output port obtained according to the hit is transferred as it is without being rewritten (step S4).

On the other hand, as a result of retrieval, if required route information (output port) is not hit, the external routing table 19A in the routing table 19 is retrieved using the destination IP address as a key being assisted by the management unit 14 (step S5). This is a retrieval for a destination IP address for the next hop. More specifically, as described with reference to Fig. 13, destination information correlating the external routing table 19A to the internal routing table 19B, namely an IP address of the closest peripheral router (including the route for the transmission equipment) is retrieved.

When required route information is not hit in the next hop (step S6), it means that there is no key for retrieval in the internal routing table 19B, so that the processing shifts to the processing for aborting a frame and then terminated. On the other hand, when the route information is hit in the next hop (step S6), determination is made as to whether the destination IP address in the next hop indicates a route for the apparatus, namely an apparatus directly connected to the apparatus, or a peripheral router (step S7).

As a result, when it is determined that the route indicated by the destination IP address in the next hop is a route for the apparatus, then the internal routing table 19B is retrieved using the destination IP address as a key (step S8). More specifically, as described with reference to Fig. 13, in the internal routing table 19B, a frame transmission port (output port) corresponding to the destination IP address is retrieved.

When an output port is hit in the retrieval of this internal routing table 19B (step 10), routing information in which the hit output port is correlated to an destination address limited to the IP header is registered in the IP cache table 13a (step S11). Then, the processing returns to step S2. When no output port is hit (step S10), an ARP (Address resolution Protocol) request frame (a request for an MAC address) is sent to the network, and then in the next step S13, the processing for aborting a frame is executed.

Also in step S7, if a route indicated by the destination IP address for the next hop is a peripheral router, the internal routing table 19B is retrieved using a destination IP address for the next hop is retrieved (step S9). More specifically, as described in relation to Fig. 13, a frame transmission port (output port) corresponding to the IP address of the peripheral router (a destination IP address for the next hop) is retrieved in the internal routing table 19B. From the step and on, the processing is executed like in that for a route for the transmission equipment.

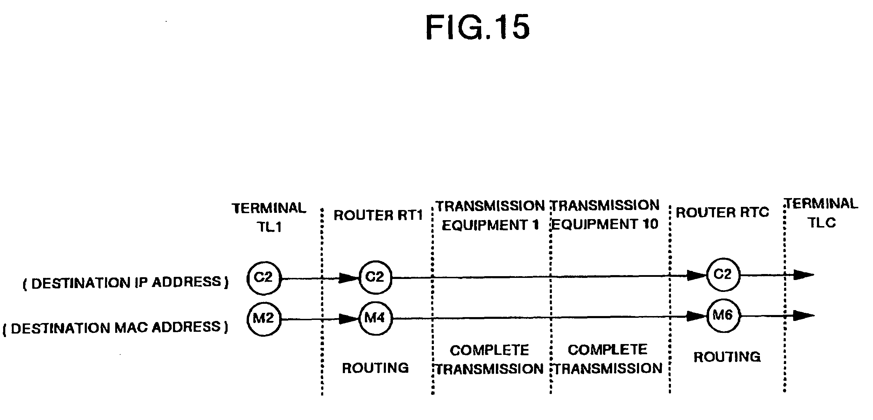

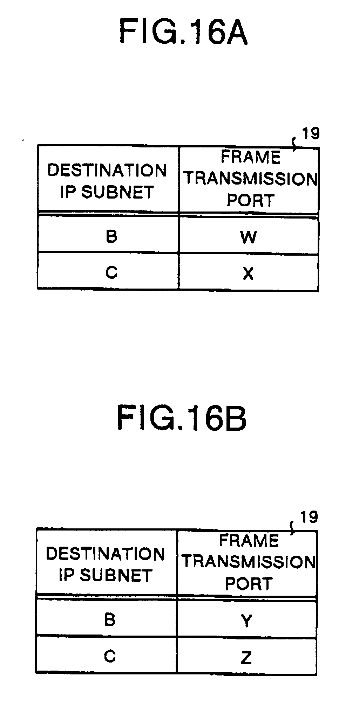

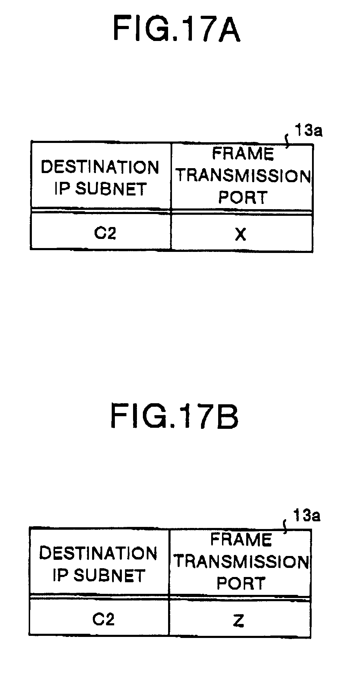

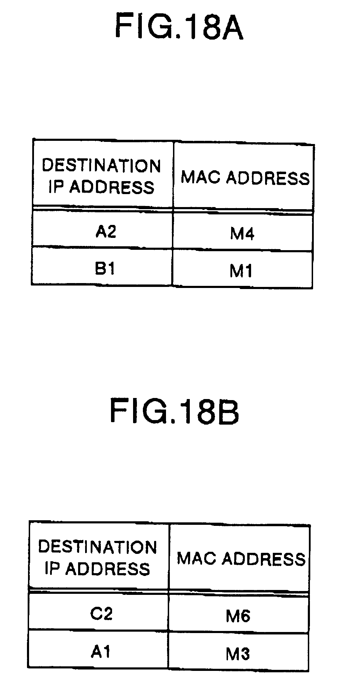

Next description is made for a case as an specific example thereof where a frame is transferred from a terminal TL1 connected to an LAN in the side of subnet SBN to a terminal TLC connected to a LAN in the side of subnet SBC in the network transmission system shown in Fig. 10 above. Fig. 15 is a view for explaining shift of a destination IP address and a destination MAC address transferred in the network transmission system, Figs. 16A and 16B are views showing an example of contents stored in a routing table in the network transmission system, and Figs. 17A and 17B are views showing an example of contents stored in the IP cache table 13a in the network transmission system. Figs. 18A and 18B are views showing an example of contents stored in a routing table for the router RT1 and in a routing table for the router RTC respectively in the network transmission system.

When relaying a frame from the terminal TL1 to the terminal TLC, a routing operation is started in the routers RT1 and RTC by referring the routing tables in Figs. 18A and 18B respectively, so that an MAC address in the MAC header transmitted from the terminal TL1 is rewritten from the MAC address "M2" to "M4" when passing through the router RT1 and from "M4" to "M6" when passing.through the router RTC (Refer to Fig. 15).

In this frame relay, a frame is transmissively relayed through the transmission equipments 1, 10, so that the MAC address is not rewritten, and the frame is received by the router RTC as it was when transmitted from the router RT1. However, if the destination IP address "C2" has not been registered in the IP cache table 13a in either one of or both the transmission equipments 1 and 10, retrieval of the routing table 19 by firmware is executed. The output port and destination IP address obtained through the retrieval are, as described with reference to the flow chart above, registered in the IP cache table 13a.

Namely in the transmission equipment 1, routing information in the routing table shown in Fig. 16A is used, and in the transmission equipment 10, routing information in the routing table 19 shown in Fig. 16B is used. It should be noted that each of the routing tables 19, 19 in Fig. 16A and Fig. 16B is formed with the external routing table 19A and internal routing table 19B.

In the IP cache table 13a, a destination IP address "C2" and a frame transmission port "X" are registered in the mutual correspondence in the transmission equipment 1 (Refer to Fig. 17A), and a destination IP address "C2" and a frame transmission port "Z" are registered in the mutual correspondence in the transmission equipment 10 (Refer to Fig. 17B).

Then, when frame transmission with the correspondence relation as shown in Figs. 17A and 17B is executed, as routing information has been registered in the IP cache table 13a, high speed switching can be executed only by route selection by a cache (hardware) without executing route selection by firmware.

As described above, with this Embodiment 1, when transmission of a frame based on a common frame format and including destination information (IP header) is relayed between a plurality of LANs, route information corresponding to destination information included in a frame received from each LAN is selected from stored route information, and the received frame is relayed as it is according to the route information. With this feature, a frame is transmissively relayed without being rewritten, and a route can be decided only by checking the destination, so that it is possible to realize an excellent cost performance for the entire apparatus without being restricted by the conventional type of transmitting technology based on OSI layer. Herein the cost performance is defined as a combination of a high performance switching hub and a high performance router and the possibility to provide the combination with the cost like that of a switching hub or a router.

Also when transmission of a frame based on a common frame format and including destination information (IP header) is relayed between a plurality of LANs, a routing protocol is recognized according to a frame received from each network, destination information on each network is correlated to route information and stored according to the routing protocol, and at the same time route information corresponding to destination information included in a frame received from each network is selected from stored route information, and the received frame is relayed as it is according to the route information. With this feature, a frame can transmissively be relayed without being degraded and information for routing (routing information) can be fetched from the frame, so that a routing table can easily be compiled.

In the switch engine 11, when a frame based on a common frame format and including destination information is received from each network, route information corresponding to a destination IP address in a frame is retrieved from the IP cache table 13a in the processing unit 13, and when the route information is obtained, the received frame is relayed and transmitted as it is according to the route information, and in the management unit 14, when route information is not obtained as a result of retrieval in the switch engine 11, the retrieval is made in the routing table 19 in the management unit 14, and when the route information is obtained as a result of retrieval, the route information and the destination IP address used for the retrieval are correlated to each other and registered in the IP cache table 13a. With this feature, when required route information is obtained in the stage of retrieval using the IP cache table 13a, a frame can completely be relayed without making the management unit 14 operate, so that a relaying operation can be executed at a higher speed, and the cost performance of the entire apparatus can further be improved.

In the switch engine 11, when a frame including a routing protocol is received from each network, the routing protocol is recognized from the received frame, and in the management unit 14, the routing table 19 is compiled (newly prepared, or changed) by the switch engine 11 according to the recognized routing protocol. With this, the IF cache table 13a is used at first only for retrieval of a route by the switch engine 11 with a work load to the processing unit being reduced as much as possible, so that a frame can transmissively be relayed without any delay, and for this reason the cost performance for the entire apparatus can further be improved.

When relaying and transmitting a frame, if a routing protocol spontaneously transmitted from other transmission equipment is recognized from the received frame, the received frame is fetched, new destination information is generated, and the generated destination information is spontaneously transmitted to the other transmission equipment. With this feature, information for routing in a system can easily be compiled relaying a routing protocol between the transmission equipments 1 and 10.

To describe at the level of OSI, route selection is made according to an IP address at the layer 3, so that functions at the layer 3 (such as the IP multicast function (Refer to Figs. 3A and 3B), IP layer band area control function, priority control for IP layer, and IP filtering) can be realized. Namely functions like those of a router based on the conventional technology can be realized without being restricted by the conventional type of transmitting technology based on OSI layers.

Further as a frame is transmissively relayed by the transmission equipments 1, 10, degradation associated with frame rewriting does not occur (Refer to Figs. 4A and 4B above), functions like those of a switching hub which is the existing technology can be realized without being restricted by the conventional type of transmitting technology based on OSI layers.

Also as a frame is transmissively relayed by the transmission equipments 1, 10, system operation is insured without causing any trouble in connection with peripheral existing devices, so that any of existing frames can be used according to the necessity, and it is not necessary to add an identifier such as a tug, and for this reason a system with high feasibility can be provided.

Also a frame is transmissively relayed by the transmission equipments 1, 10, so that a converting operation between a cell and a frame like in a transmission equipment in which an ATM switch is applied is not required, and for this reason the transmission equipments 1, 10 can be realized with the manufacturing cost like that of a router or a switching hub based on the conventional technology.

Description of Embodiment 1 above assumed a case of a transmission equipment which transmissively relays a routing protocol frame without rewriting it, but like in Embodiment 2 described below, also an ARP frame may transmissively be relayed without being rewritten like in a case of a routing protocol frame. In Embodiment 2, detailed description is made also for a function for automatically fetching a host route with an ARP frame and an updating function. It should be noted that description of configuration and functions in Embodiment 2 similar to those in Embodiment 1 is omitted herein and description is made herein only for different portions. The same reference numerals are assigned to the same portions of Embodiment 2 as those in Embodiment 1.

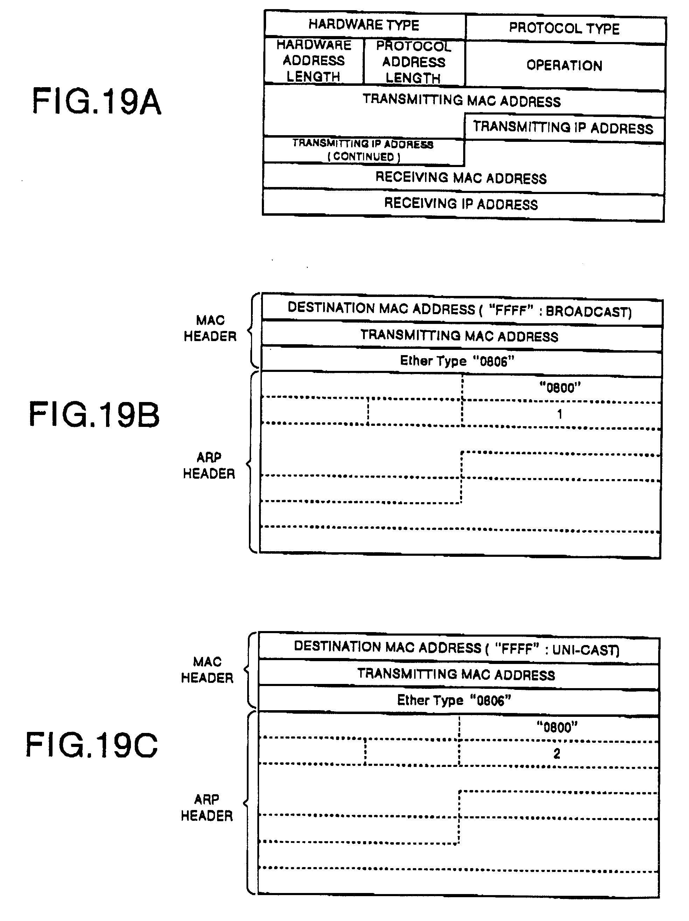

Next description is made for Embodiment 2 with reference to Fig. 19A to 19C to Fig. 28. At first description is made for positioning of an ARP frame with reference to Figs. 19A to 19C. Fig. 19A is a view showing a header format of an ARP, Fig. 19B is a view showing an example of a format of an ARP request frame, and Fig. 19C is a view showing an example of a format of an ARP response frame.

An ARP is a protocol for obtaining an MAC address (hardware address) from an IP address. To describe more detailedly, this ARP is used in the state where an address of a physical hardware interface can not be known even though an IP address of a target host apparatus is already known. Namely, this ARP is a protocol for knowing correspondence between an IP address and an MAC address by transmitting an ARP request frame to all host apparatuses making use of a broadcast function of a LAN and receiving an ARP response frame as a response thereto.

The ARP header having the function as described above comprises, as shown in Fig. 19A, a hardware type, a protocol type, a hardware address length, a protocol address length, an operation, a transmitting MAC address, a transmitting IP address, a receiving MAC address, and a receiving IP address.

With the configuration as described above, the hardware type indicates a type of network hardware. For instance, a hardware type of Ethernet is "1", The protocol type indicates which protocol is requesting the current operation. For instance, a protocol type of IP is "0800" in the hexadecimal expression. The hardware address length indicates a length of a hardware address with an octet unit. For instance, in a case of an MAC address, the hardware length is "6". The protocol address length indicates a length of a network layer with an octet unit. For instance, in a case of an IP address, the protocol address length is "4".

The operation indicates whether a frame is an ARP request or an ARP response. If the frame is an ARP request, the operation is "1", and if the frame is an ARP response, the operation is "2".

The transmission IP address, transmitting MAC address, and receiving IP address constitute an address section. In this address section, the transmitting MAC address indicates a hardware address of a transmitting network, while the transmitting IP address indicates an IP address of a transmitter. The receiving MAC address indicates a hardware address of a destination network being searched, while the receiving IP address indicates an IP address of a receiver.

An ARP request frame and an ARP response actually casted have the configuration following the above-described ARP header format. Main sections of these frames are as shown in Fig. 19B and in Fig. 19C, respectively. Namely in the ARP request frame, as shown in Fig. 19B, a destination MAC address (broadcast), a transmitting MAC address, Ether type (ARP: "0806") are set in the MAC header, and an ARP type (request), a transmitting MAC address, a transmitting IP address, a destination MAC address (which becomes empty when requested), and a destination IP address (an address as a target) are set in the ARP header.

Further in the ARP response frame, as shown in Fig. 19C, a destination MAC address (uni-cast), a transmitting MAC address, and an Ether type are set in the MAC header, and an ARP type (response) a transmitting MAC address (an address as a target), a transmitting IP address (an address as a target), a destination MAC address (a transmitting MAC address having been set in a request frame), and a destination IP address (a transmitting IP address set in the request frame) are set in the ARP header.

An MAC address (hardware address) can be known in a host apparatus in a requesting side, namely in a transmission equipment by transacting an ARP request frame and an ARP response frame between transmission equipments and also between a transmission equipment and a terminal. Also a transmitting IP address is included in the ARP frame described above. For this reason, when a terminal connected to a transmission equipment transmits the ARP response/request frame, the transmitting IP address can be known from the ARP response/request frame in the transmission equipment.

The ARP frame based on an ARP frame format may spontaneously be transmitted from a terminal side to a transmission equipment, and the transmission equipment can know a transmitting IP address of the terminal from the spontaneously transmitted ARP frame. In this case, a value not belonging to the ARP request nor to ARP response (such as "0", "3", or "4") may be set as an operation in the ARP header, and it is necessary to previously decide rules for the convention.

For an ARP transfer function including this spontaneous transmission, a transmissive frame transfer function according to Embodiment 1 described above is required. With this transmissive frame transfer function, it becomes possible to automatically fetch and update a host route with an ARP frame. The functions for automatically fetch and update a host route with an ARP frame are defined therein as a function for learning a relation between a transmitting IP address stored in each frame and a received external port for all ARP request frames and ARP response frames received from external ports (directly connected to the transmission equipment).

With this learning function, a relation between IP addresses of one or a plurality of terminals connected to a transmission equipment or those of terminals or the like connected via an Ether switch thereto and output ports is obtained. This relation is registered as data for a host route in the internal routing table 19B. It is assumed herein that the learning operation was executed to an ARP frame received from an internal port connected via a communicating transmission equipment thereto. The reason is that data for the host route is reported via the internal RIP as route information.

At first description is made for a basic principle in Embodiment 2 of the present invention. An object of this Embodiment 2 is to realize frame transmission in Embodiment 1 above also for an ARP frame. So the same reference numerals are assigned to portions of Embodiment 2 common to those in Embodiment 1 and description thereof is omitted herein. Also the same reference numerals are used in the related figures.

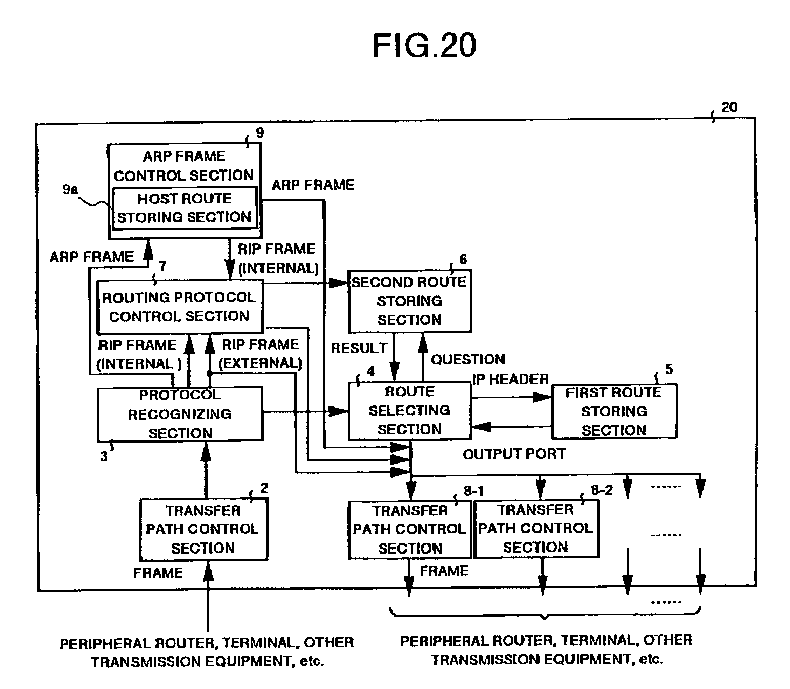

Fig. 20 is a functional block diagram functionally showing a transmission equipment according to Embodiment 2 of the present invention. The transmission equipment 20 shown in Fig. 20 comprises an ARP frame control section 9, in addition to the transfer path control section 2, a protocol recognizing section 3, a route selecting section 4, a first route storing section 5, a second route storing section 6, a routing protocol control section 7, and a transfer path control section 8 (more specifically, the transfer path control sections 8-1, 8-2, ... as shown in Fig. 20) each provided in the transmission equipment 1 according to Embodiment 1.

When a frame received via the transfer path control section 2 is recognized in the transmission equipment 20 shown in Fig. 20, actually also an ARP is included as an object for recognition. This protocol recognizing section 3 transmits the next frame when the received frame is a routing protocol. Namely, if the routing protocol is an internal RIP, the internal RIP frame is sent to the routing protocol control section 7, and if the routing protocol is an external RIP, the external RIP frame is transmitted to both the routing protocol control section 7 and the transfer path control sections 8-1 ... Transmission of the external RIP frame to this transfer path control sections 8-1 .... is executed to execute transmissive frame transfer.

Also this protocol recognizing section 3 transmits, when a received frame is an ARP frame, the ARP frame to the ARP frame control section 9. If the received frame is ordinary data, this protocol recognizing section 3 transmits the received frame to the route selecting section 4. It should be noted that, when the received frame is an RIP frame (routing protocol), routing information is included in the received frame. Further, if the received frame is an ARP frame, an ARP is included in the received frame.

The routing protocol control section 7 checks a received frame (an internal RIP or an external RIP ), extracts routing information therefrom, and compiles (newly prepares, or changes) a correspondence between an IP layer of the second route storing section 6 and an output port according to the routing information as well as to a host route from the ARP frame control section 9. Further, this routing protocol control section 7 generates new destination information for an internal RIP frame, and spontaneously sends the generated destination information to other transmission equipments through the transfer path control sections 8-1 ...

The ARP frame control section 9 has a host route storing section 9a, detects a host route by extracting a transmitting IP address or the like from the ARP frame sent from the protocol recognizing section 3, and registers the host route in the host route storing section 9a. This ARP frame control section 9 supplies the host route registered in the host route storing section 9a to the routing protocol control section 7, or transmissively transmits the received ARP frame to the transfer control sections 8-1 ... The host route indicates herein a relation between IP addresses of one or a plurality of terminals connected to a transmission equipment or those connected via an Ethernet switch and output ports.

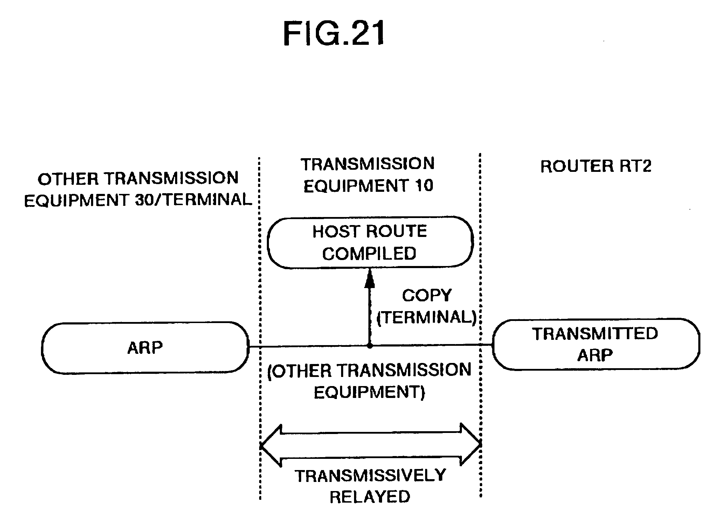

Then description is made for operations with reference to the functional blocks shown in Fig. 20. Fig. 21 is a view for explaining a flow of a frame in the network transmission system according to Embodiment 2 of the present invention. Herein description is made in correspondence to the IP frame shown in Fig. 2 according to Embodiment 1. In Fig. 21, the routers RT1 and RT2 are connected to an internal port and a terminal is connected to an external port in the transmission equipment 20 for convenience of explanation.

When the received ARP frame is an ARP not registered yet, the transmission equipment 20 builds up a host route only for an external port, namely a terminal or terminals under direct control by the transmission equipment, but if the received ARP frame is transferred from an internal port, namely another transmission equipment (for instance, the transmission equipment 21), the transmission equipment transmissively transfers the received ARP frame as it is to the router RT2.

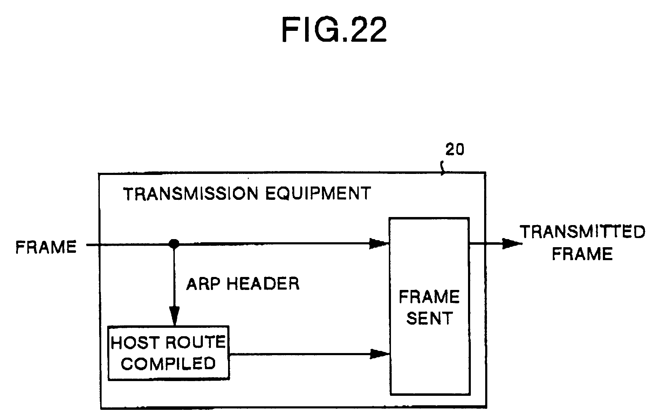

What was described above would be better understood by referring to Fig. 22. Fig. 22 is a view showing a principle of relaying a received frame in Embodiment 2 of the present invention. In the transmission equipment 20 shown in Fig. 22, an external port is extracted according to a type of an ARP frame input port in the received frame, and in a case of external port, a host route is built up according to a relation between a transmitting IP address and the received external port, and on the other hand when the input port is not an external port, the received frame is transmitted as it is. Thus, also an ARP frame can transmissively be relayed at a higher speed.

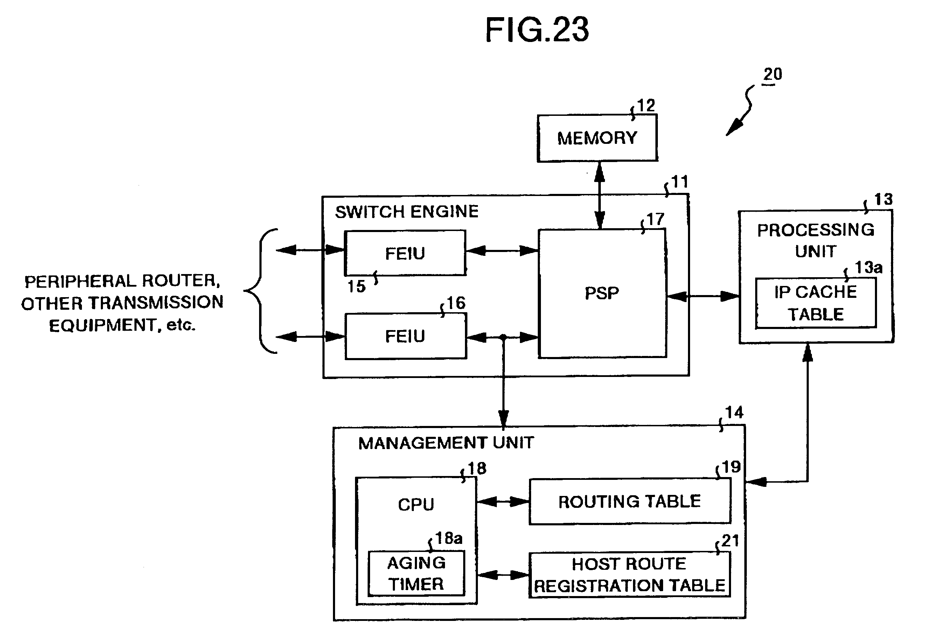

Then description is made for this Embodiment 2 of the present invention with reference to the hardware. Fig. 23 is a block diagram showing hardware of the transmission equipment 20 described above. The transmission equipment 20 shown in Fig. 23 has, like in Embodiment 1 above, the configuration in which, for instance, a memory 12, a processing unit 13, and a management unit 14 are connected to the switch engine 11. Also the following description assumes a case of application to Ethernet.

The hardware configuration of Embodiment 2 is similar to that of Embodiment 1 described above. To describe configuration relating to an ARP frame more specifically, as shown in Fig. 23, in the management unit 14, an aging timer 18a is incorporated in the CPU 18, and a host route registration table 21 equivalent to the host route storing section 9a and separated from the routing table 19 is provided.

This management unit 14 further has a function of the ARP frame control section 9. This management unit 14 compiles (newly prepares, or changes) the routing table 19 and host route registration table 21 according to controls by the CPU 18 in response to a request from the PSP 17, and supplies routing information short in the IP cache table 13a in response to a request from the processing unit 13. It should be noted that the CPU 18 provides controls for deleting routing information which is deleted or changed according to updating of the routing table 19 as well as for compiling the host route registration table 21.

The aging timer 18a is a timer for counting down timer. This aging timer 18a monitors a timing for outputting an ARP request frame to all external ports when a count value reaches a prespecified value in association with counting down, and is reset when a host route (a transmitting IP address, an output port, an aging timer value) already registered in the host route registration table 21 is issued as an ARP response.

Detailed description for the host route registration table 21 is made later, but an IP address as a transmitting IP address, an input port as a hardware address, and a counting-down value (aging timer value) in the aging timer 18a are registered in the mutual correspondence in the host route registration table 21. In this host route registration table 21, the aging time value changes according to the count-down processing by the aging timer 18a. When this host route registration table 12 is updated, also the internal routing table 19B is updated according to a result of updating.

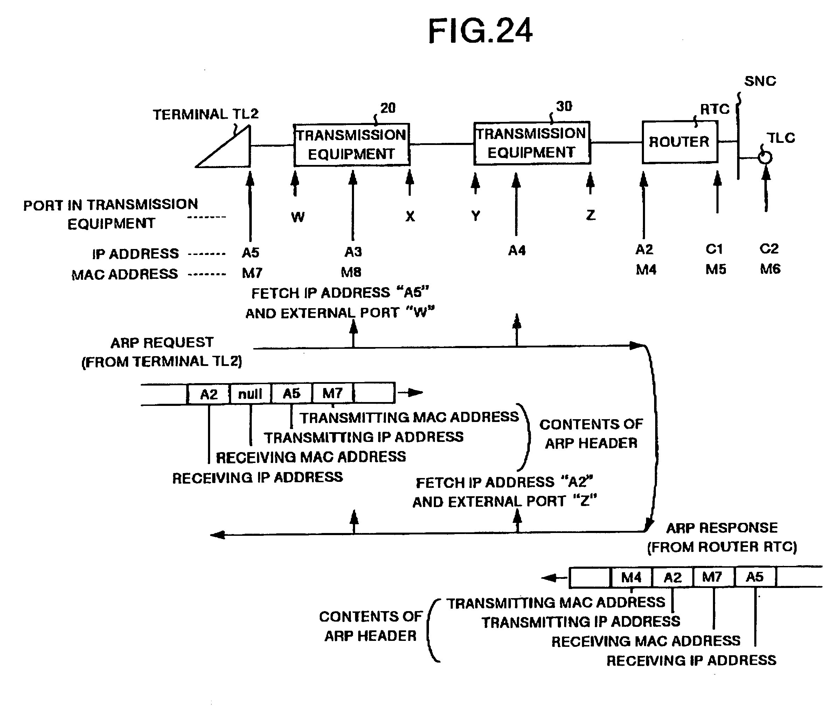

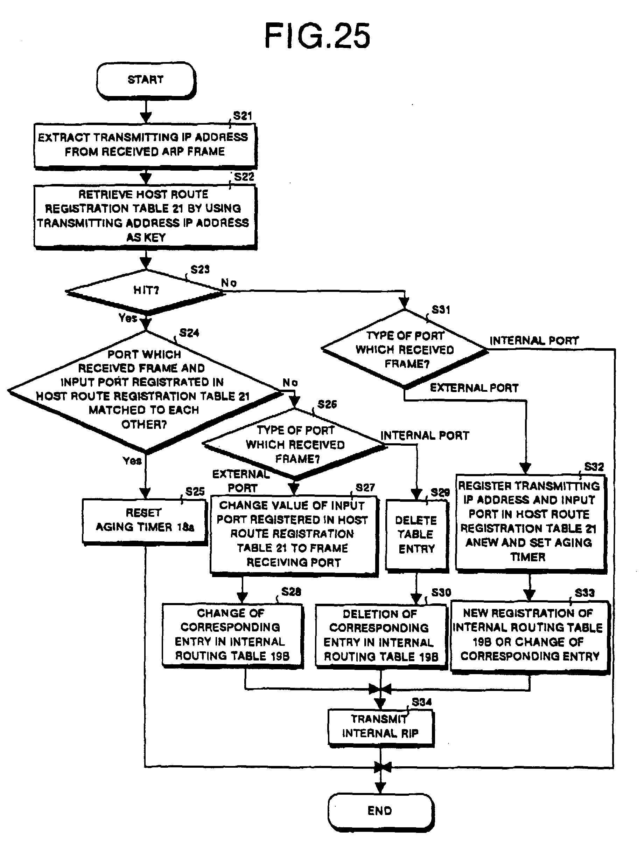

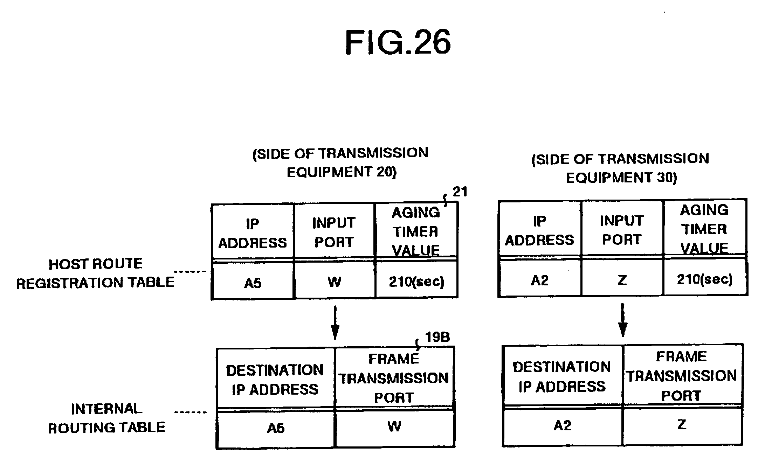

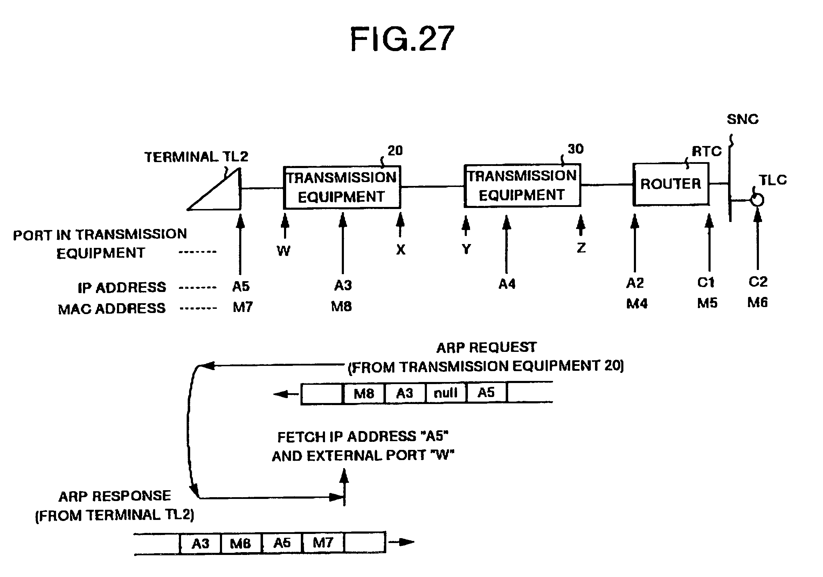

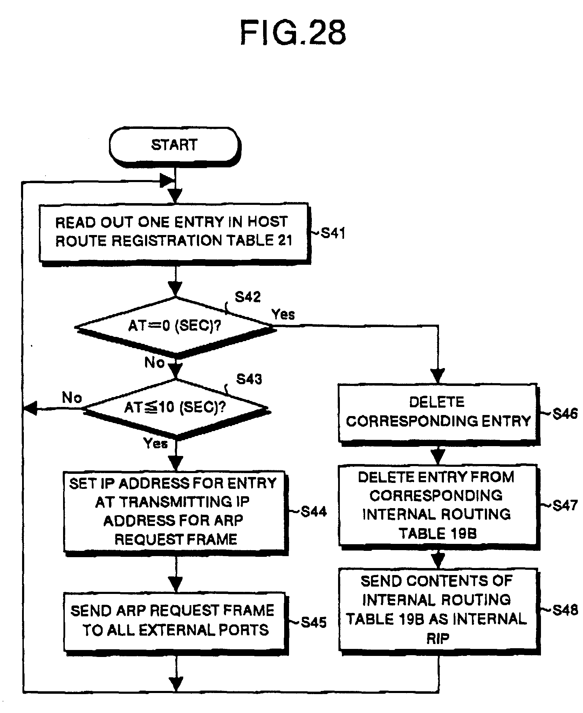

Next description is made for operations for automatically fetching and automatically updating a host route. Fig. 24 is a view for conceptually explaining an ARP transmitting/receiving function of a terminal in the network transmission system according to Embodiment 2 of the present invention, Fig. 25 is a flow chart illustrating the ARP frame receiving function according to Embodiment 2, Fig. 26 is a view for explaining a relation between the host route registration table 21 and the internal routing table 19B in the network transmission system, Fig. 27 is a view for conceptually explaining the ARP transmitting/receiving function of a transmission equipment in the network transmission system according to Embodiment 2, and Fig. 28 is a flow chart for explaining the ARP frame transmitting function according to Embodiment 2.

At first description is made for a case where an ARP request frame is transmitted from a terminal with reference to Fig. 24 to Fig. 26. In the network transmission system shown in Fig. 24, the terminal TL2 is connected to a terminal of the transmission equipment 20, and a transmission equipment 30 having the same configuration as that of this transmission equipment 20 and also having the same functions is connected to another terminal of the transmission equipment 20. Also connected to this transmission equipment 20 is a network having the same connective relation as that of the network transmission system as shown in Fig. 7, and as a representative thereof, a connecting state of a router RT in the side of subnet SNC is shown in the figure. It should be noted that a connecting state of the terminal TLC is shown as a representative thereof in the subnet SNC.

Allocation of ports of transmission equipments 20, 30 is set according to a relation similar to that of the transmission equipment 1 as well as of the transmission equipment 10 in Embodiment 1 described above. Namely, in the transmission equipment 20 functioning in place of the transmission equipment 1 (Refer to Fig. 7), "W" is allocated to a port in the side of terminal TL2 functioning in place of the router RT1 and "X" to a port in the side of transmission equipment 30 functioning in place of the transmission equipment 10 respectively. Also in the transmission equipment 30 functioning in place of the transmission equipment 10 (Refer to Fig. 7), "Y" is allocated to a port of the transmission equipment 20 functioning in place of the transmission equipment 1, and "Z" to a port in the side of router RTC respectively.

To described IP addresses of related devices in the transfer direction from the terminal TL2 to the terminal TLC, "A5" is allocated to the terminal TL2, "A3" to the transmission equipment 20, "A2" and "C1" to the router RTC, and "C2" to the terminal TLC respectively. Further to describe MAC addresses of the devices in the transfer direction from the terminal TL2 to the terminal TLC, "M7" is allocated to the terminal TL2, "M4" and "M5" to the router RTC and "M6" to the terminal TLC respectively. It should be noted that the MAC address of "M8" is allocated to the transmission equipment 20.

In the system described above, when an ARP request is transmitted from the terminal TL2 connected to the transmission equipment 20 to the router RTC, an ARP request frame comprising the following data is used. Namely, as a transmitting side is the terminal TL2, "M7" is stored as the transmitting MAC address in the ARP request frame (a header of the ARP), and also "A5" is stored as the transmitting IP address. Also as the receiving side is the router RTC, "A2" is stored as the receiving IP address, and "null" is stored as the receiving MAC address as an object for retrieval because the MAC address is unknown.

Then an ARP response is returned from the receiving router RTC. In this case, an ARP response frame comprising the following data is used. Namely as the transmitting side is the router RTC, this time "M4" is stored as the transmitting MAC address in the ARP response frame, and "A2" is stored as the transmitting IP address. Thus, a transmitting MAC address as an object for retrieval is set. Also the receiving side is the terminal TL2, this time "A5" is stored as the receiving IP address, and "M7" is stored as the receiving MAC address as a destination for transmission of a response.

The operations for sending and receiving an ARP request and an ARP response are spontaneously executed in the side of terminal TL2. In the transmission equipments 20 and 30, also for the ARP as described above, like in a case of the RIP described above, perfect transmission and electronic interception are executed. When an ARP request frame is transferred in response to an ARP request from the terminal TL2 to the router RTC, in the transmission equipment 20, perfect transmission of the received ARP request frame is executed, and in addition confirmation of the port "W" indicating from which port the ARP request frame has been inputted and electronic interception to a transmitting IP address "AS" identifying a transmitter from the ARP request frame are executed.

Next description is made for an actual processing flow with reference to Fig. 25 and Fig. 26. In the transmission equipment 20, when an ARP request frame is received, when the transmitting IP address "A5" is extracted from the received ARP request frame (step S21). Then retrieval of the host route registration table 21 is executed by using the extracted transmitting IP address "A5" as a key (step S22). In this step, if the transmitting IP address "A5" has not been registered in the host route registration table 21, the transmitting IP address "A5" can not be hit (step S23), and the processing shifts to step S31.

In step S31, determination is made for a type (port type) of a port which received the received ARP request frame. Namely, determination is made as to whether the input port is an internal port or an external port. In this case, as shown in Fig. 24, as the terminal TL2 is directly connected to the external port "W" of the transmission equipment 20, so that it is determined that the port type is an external port. If the terminal TL2 is indirectly connected thereto via other transmission equipment, it is determined that the input port is an internal port.

When it is determined in step S31 that the input port is an external port, the processing shifts to step S32, and an operation for learning a relation between the transmitting IP address and the receiving external port is started. Namely, in step S32, as shown in Fig. 26, the transmitting IP address "A5" extracted in step S21 is correlated to the input port "W" determined in step S31 and is registered in the host route registration table 21. Further for instance 210 (set) is set as an aging timer value indicating a timer for learning. As described above, learning of the correspondence described above is started when count-down is started by the aging timer 18a.

As described above, one of the causes for a case where a transmitting IP address in the received ARP frame can not be hit and at the same time it is determined that the input port is an external port is that an external port to an IP address at a transmitting terminal has been changed to the other external port in the same transmission equipment 20. For this reason, it is necessary to learn the host route. For that purpose, in the subsequent step S33, as shown in Fig. 26, new registration of the internal routing table 19B or change of the corresponding entry is executed in response to the new external port.

In step S33, when the internal routing table 19B is updated, the contents of updating is reported to other transmission equipment, so that an internal RIP including the updated contents is transmitted to other transmission equipment (step S34).

When it is determined in step S31 that the input port is an external port, one of the causes is conceivable that the external port corresponding to the IP address at the transmitting terminal is connected to other transmission equipment (for instance, transmission equipment 30) . For this reason, administration of the route is assigned to the other transmission equipment, so that the operations for automatically fetching and updating are not required, thus the processing for receiving a frame being finished.

When the transmitting IP address "A5" can be hit from the host route registration table 21 in step S23, the processing shifts to step S24. In step S24, determination is made as to whether the input port for the received ARP request frame matches the input port registered in correspondence to the transmitting IP address "A5" in the host route registration table 21.

When coincidence between the two input ports is confirmed in step S24, the processing shifts to step S25, and the aging timer 18a is reset based on the recognition that the correspondence between the transmitting IP address and the input port has been learned. With this operation, the receiving process is finished. In this step S25, the aging timer 18a is reset to keep entries in the host route registration table 21 further present therein. Herein the resetting is defined as returning a count value by the aging timer 18a to the initial value of "210 (sec)".

On the other hand, if incoincidence between the input ports is confirmed in step S24, the processing shifts to step S26, and determination is made for a type of a port which received the received ARO request frame. Namely, determination is made as to whether the input port is an internal port or an external port. As a cause for shift to step S26, one conceivable reason is movement of a transmitting IP address between an internal port and an external port.

When a port type indicates an external port (step S26), movement of the transmitting IP address from other external port to still another external port is confirmed. Then, an input port corresponding to the transmitting IP address registered in the host route registration table 21 is changed to an input port for the received ARP frame, in other words, an external port (step S27). Then also in the internal routing table 19B, for the corresponding entry, a relation between the IP address and an input port is changed in association with change of the input port (step S28). Then the processing shifts to step S34, and an internal RIP including the contents changed in step 28 is transmitted.

When a port type indicates an internal port (step S26), movement of the transmitting IP address between an external port to an internal port is confirmed. This movement indicates that control for administration of the terminal has been shifted to other transmission equipment. For this reason, an entry relating to the transmitting IP address is deleted from the host route registration table 21 (step S29), and further the similar entry is deleted also from the internal routing table 19B (step S30). Then the processing shifts to step S34, and the internal RIP including the contents changed in step S30 is transmitted.

In the flow of an ARP frame shown in Fig. 24, an ARP request is issued from the terminal TL2 to the router RTC, and an ARP response is sent from the router RTC to the terminal TL2, so that the transmission equipment 30 equivalent to the transmission equipment 20 compiles an entry for the router RTC in the host route registration table (equivalent to the host route registration table 21) as well as in the internal routing table (equivalent to the internal routing table 19B).

Also in this case, the receiving processing is executed according to the flow chart shown in Fig. 25 like in the above-described relation between the transmission equipment 20 and the terminal TL2. Namely, as the router RTC is connected to an external port "Z" of the transmission equipment 30, the transmission equipment 30 completely transmits an ARP response frame, and electrically intercepts the transmitting IP address "A2" in this ARP response frame. If the correspondence between this electronically intercepted transmitting IP address "A2" and the receiving external port has already been learned in the host route registration table, this receiving processing is finished, and if the correspondence has not been learned, the operation for learning is started, or the host route registration table is updated, or an entry relating to the transmitting IP address is deleted. At the same time, new registration or change of an entry is parallelly executed also in the internal routing table.

In the case shown in Fig. 26, the host route registration table in the transmission equipment 30 indicates a case where correspondence between the transmitting IP address "A2" and the received external port "Z" has not been learned. In this case, the correspondence between the transmitting IP address "A2" and the received external port "Z" is newly registered in the host route registration table, and further an aging timer value "210 (sec)" is set. With this, an operation for learning this entry is started. Then the ARP frame is received by the transmission equipment 30, and if a result of electronic interception for this ARP frame indicates a correspondence between the transmitting IP address "A2" already registered and the received external port "Z", the aging timer 18a is reset and the learning operation is again started.

In the case shown in Fig. 24 above, when the terminal TL2 itself transmits an ARP request frame and receives an ARP response frame, the transmission equipments 20, 30 located on the route electronically intercepts the ARP request frame and ARP response frame respectively to newly register or update (including changing) an entry in the internal routing table.

In the relaying network system according to Embodiment 2, however, when an entry is newly added to the host route registration table 21, the aging timer 18a is started, and when an ARP request or an ARP response can not electronically be intercepted for the new entry within a given period of time, the entry is deleted from the host route registration table 21 as well as from the internal routing table 19B.

Next description is made for a case where a transmission equipment itself issues an ARP request with reference to Fig. 27 and Fig. 28. The processing for transmitting this ARP request frame is always executed.

Fig. 27 shows an ARP request frame and an ARP response frame in a case where an ARP request is transmitted from the transmission equipment 20 to the terminal TL2 connected thereto. In the ARP request frame, "M8" is stored as a transmitting MAC address and "A3" as a transmitting IP address in the ARP request frame as a transmitting side is the transmission equipment 20. Also as the receiving side is the terminal TL2, "A5" is stored as a receiving IP address and "null" is stored as the receiving MAC address as an object for retrieval because the address is unknown.

An ARP response frame comprising the following data is returned from the terminal TL2 which is a receiving side. Namely, as the transmitting side is the terminal TL2, "M7" is stored as a transmitting MAC address in the ARP response frame, and also "A5" is stored as a receiving IP address. As described above, the transmitting MAC address as an object for retrieval is set. Also as the receiving side is the transmission equipment 20 this time, "A3" is stored as the receiving IP address, and "M8" is stored as the receiving MAC address which is a destination for response.

The operations for transmitting an ARP request and receiving an ARP response described above are spontaneously executed in the side of transmission equipment 20. The transmission equipment 20 confirms a port "W" indicating from which port the ARP response frame is inputted from the ARP response frame returned from the terminal TL2 in response to an ARP request sent from the transmission equipment and electrically intercepts the transmitting IP address "A5" identifying the transmitter from the ARP response frame, and also newly registers the ARP response frame in each table or changes an entry in each table.

For this reason, the receiving processing shown in Fig. 25 above can be applied to an ARP response frame to an ARP request transmitted from the transmission equipment 20 or 30. The sequence is the same, so that description thereof is omitted herein.

When transmitting this ARP request frame, in the transmission equipment 20, as shown in Fig. 28, at first one entry in the host route registration table 21 is read out (step S41). From this entry read out as described above, an aging timer value being counted down by the aging timer 18a is extracted. In other words, herein an entry being counted by the aging timer 18a is an object for processing.

Then the aging timer value (indicated by AT in the figure) is determined (step S42). When the aging timer value (AT) reaches "0 (sec)", the processing shifts to step S46, and when the aging timer value has not reached "0 (sec)", the processing shifts to step S43. In step S43, further determination is made as to whether the aging timer value (AT) is, for instance, not more than 10 seconds or not, and if the aging timer value is less than 10 seconds, an ARP request is forcefully issued in the step S44 and on. Namely, in step S44, an IP address for the entry read out in the step 41 is stored at the transmitting IP address for the ARP request frame, and then in step S45, the ARP request frame is broadcast to all external ports under direct control by the transmission equipment 20.

In the receiving processing described above (Refer to step S32 in Fig. 25), immediately after count-down by the aging timer 18a is started, the aging timer value is 10 seconds or more (step S43), reception of the ARP frame sent by the terminal TL2 is waited in step S43. In other words, it is recognized that an ARP frame is being queued, and the processing returns to step S41.

When the aging timer value is less than 10 seconds (step S43), the transmission equipment 20 does not wait for arrival of an ARP frame from the terminal TL2, and shifts to an operation for positively fetching an ARP frame from the terminal TL2. In this sense, a trigger for shifting the transmission equipment 20 from negative operation to a positive operation is defined that the remaining against timer value is 10 seconds.

After an ARP request frame is broadcast as described above to all external ports, arrival of an ARP response frame from the terminal TL2 is waited for. While there is no ARP response from the terminal TL2, operations in step S41 to S45 are repeated until the aging timer value is reset. Then when an ARP response is received from the terminal TL2 and contents of the ARP response frame is the same as the corresponding entry, the aging timer value is reset, so that entries in the host route registration table 21 as well as in the internal routing table 19B can be maintained (Refer to Fig. 25).

If no ARP response is received from the TL2 within the period of time for count-down of the aging timer value and the aging timer value reaches "0 (sec)", it is recognized that the prespecified period of time is over, and an entry read out from the host route registration table 21 is deleted from the table (step S46), and an entry having the same contents is deleted also from the internal routing table 19B (step S47).

As described above, when contents in the internal routing table 19B is updated (or deleted), it is required to report the deletion or updating to other transmission equipment 30, so that in the subsequent step S48, contents changed in step S47 is sent with an internal RIP to the transmission equipment 30. It should be noted that, when the similar entry is also registered in the IP cache table 13a, also the entry is deleted from the IP cache table 13a.

When this report is received, control is provided so that other transmission equipment will not execute routing to the terminal, an entry of which has been deleted, for instance, for 90 seconds (30 seconds x 3 times). With this feature, it is insured that, a route can be switched even if a terminal is changed and become farther as compared to a previous one. In this case, by setting to time of inhibition of communications to at worst 210 sec (aging timer value) + 90 sec = 300 sec, it is possible to equalize the time for inhibition of communications to a default timer value in an MAC learning table in a bridge.

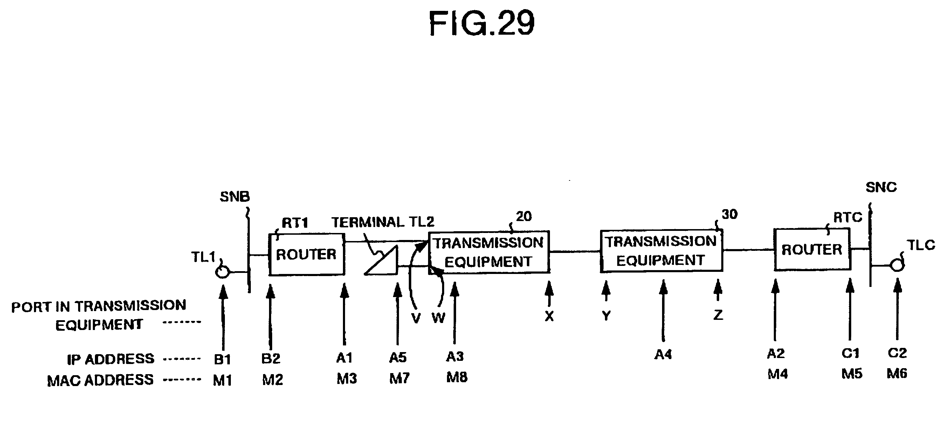

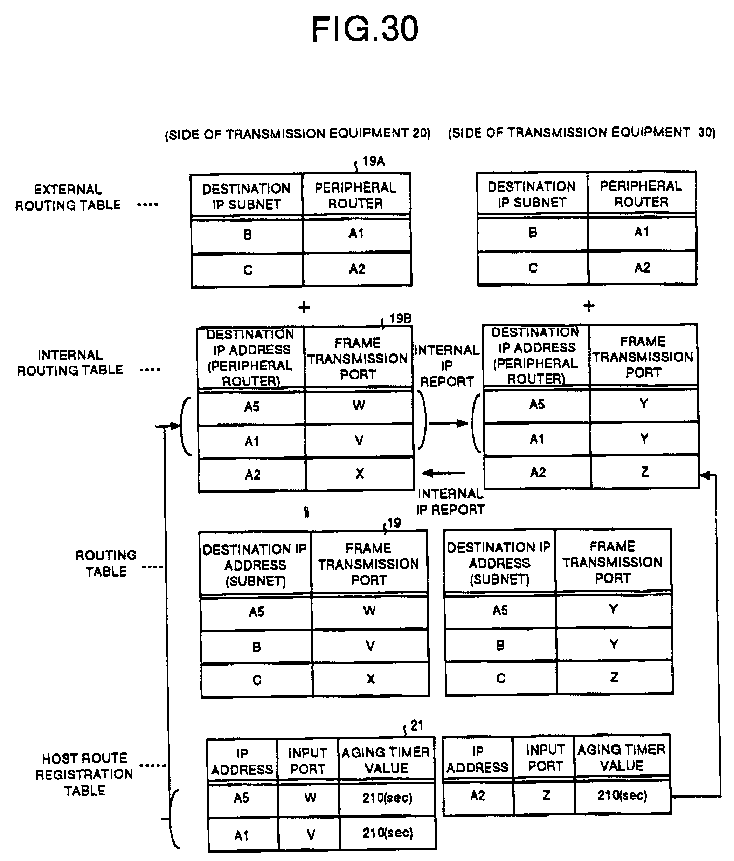

Next description is made for a case where the subnet SNB shown in Fig. 7 is connected to the transmission equipment 20 in the relaying network system shown in Fig. 24. Fig. 29 is a view for conceptually explaining a routing table compiling function of a transmission equipment in the network transmission system according to Embodiment 2 of the present invention, and Fig. 30 is a view for explaining a flow of operations for compiling a routing table in Embodiment 2.

In Fig. 29, the transmission equipment 20 has further the router RT1 connected thereto, and is connected to the subnet SNB via the router RT1. The router RT1 is connected to a port "V" of the transmission equipment 20. It is assumed herein that an IP address and an MAC address of the terminal TL1 of the router RT1 as well of the subnet SNB are as shown in Fig. 7.

The routing table 19 comprises an external routing table 19A and an internal routing table 19B each automatically compiled. However, as described above, in the internal routing table 19B, similar operation for updating are executed in response to new registration or change of an entry in the host route registration table 21.

Herein, to make description with reference to the transmission equipment 20 (or to the transmission equipment 30) as an example, in the routing table 19, as shown in Fig. 30, the external routing table 19A and the internal routing table 19B are correlated to each other with an IF address of the closest peripheral router. When using this table, for instance, to transfer a frame from the transmission equipment 20 to the subnet SNB, if detection in the IP cache table 13a is impossible, at first route information is searched at first in the external routine table 19A, and as a result an IP address of the closest peripheral router in the side of subnet SNB is "A1".

As described above, when route information is obtained through retrieval in the external routing table 19A, then retrieval of route information in the internal routing table 19B is executed. As a result, this time a frame transmission port No. "V" (a port of the router RT1) is obtained from this IP address "A1". As described above, as a result, the frame transmission port No. "V" is obtained to the destination IP subnet B (subnet SNB).

Similarly, when transmitting a frame from the transmission equipment 20 to the subnet SNC, if detection in the IP cache table 13a is impossible, at first route information is retrieved at first in the external routing table 19A, and as a result an IP address of the closest peripheral router in the subnet SNB is "A2".

As described above, route information is obtained as a result of retrieval in the external routing table 19A, then retrieval of route information in the internal routing table 19B is executed. As a result, this time a frame transmission port No. "X" (a port of the transmission equipment 30) is obtained from this IP address "A2". As described above, as a result, the frame transmission port No. "X" is obtained to the destination IP subnet C (subnet SNC).

As the terminal TL2 under direct control by the transmission equipment 20 is connected at the port "W", a destination IP address No. "A5" at the terminal TL2 and the frame transmission port No. "W" are registered in correspondence to each other in the internal routing table 19B. For this reason, as for the terminal TL2, the destination IP address No. "A5" and the frame transmission port No. "W" are registered in correspondence to each other in the routing table 19.

Table entries relating to this terminal TL2 and router RT1 are obtained, as described above, from the host route registration table 21. Namely, in the host route registration table 21, a table entry for the terminal TL2 is registered, as shown in Fig. 30, in the host route registration table 21 with the IP address "A5", input port "W", and aging timer value "210 (Sec)" in mutual correspondence to each other. Also a table entry for the router RT1 is registered, as shown in Fig. 30, therein with the IP address "A1", input port "V", and aging timer value "210 (Sec)" in mutual correspondence to each other. Table compilation for this router RT1 is like the relation between the transmission equipment 30 and router RTC, so that description thereof is omitted herein.

Contents of entries for this terminal TL2 and router RT1 are reflected to table entries in the internal routing table 19B, and the internal routing table 19B shown in Fig. 30, in other words the routing table 19 is compiled.

It is necessary to report contents updated in this intend routing table 19B to other transmission equipment, namely the transmission equipment 30. In this step, by reporting the internal RIP to the transmission equipment 30, updated contents for the transmission equipment 20 is reflected to an internal routing table of the transmission equipment 30. This reflection is executed by registering the destination IP address No. "A5" for the terminal TL2 and the destination IP address No. "A1" for the router RT1 in correspondence to the frame transmission port No. "Y" in the internal routing table as well as in the routing table of the transmission equipment 30.

In contrast, the router RTC is connected, as described above, to the transmission equipment 30 with the port No. "Z". For this reason, a table entry for the router RTC is registered in the host route registration table of the transmission equipment 30. Contents of the table entry is correspondence among the IP address No. "A2", input port No. "Z", and aging timer value "210 (Sec)".

In the transmission equipment 30, correspondence between this IP address "A2" and input port "Z" is reflected also the internal routing table as well as to the routing table to update each of the tables. Further the contents of updating is also reported by the internal RIP to other transmission equipment, namely to the transmission equipment 1.

As described above, also in the transmission equipment 20, it is necessary to update the internal routing table 19B and routing table 19 according to an internal RIP reported from other transmission equipment 20. The transmission equipment 30 adds a table entry in which the destination IP address "A2" and frame transmission port "X" are correlated to each other newly to the internal routing table 19B according to the internal RIP reported from the transmission equipment 30. The added contents is also reflected to the routing table 19.

As described above, with this Embodiment 2 of the present invention, the following effects can be obtained in addition to those in Embodiment 1. Namely, after route information relating to a transmitting IP address of a frame including a received ARP is added, before a prespecified period of time is over, if a frame including an ARP is received from a peripheral device according to the route information, the measurement is stopped, and measurement is started again after resetting, and the added contents is deleted when the prespecified period of time is over. With this operation, a peripheral device not having been registered can newly be registered according to an ARP, so that automatic fetching and automatic updating of a host route according to an ARP frame can be realized.

Also addition or deletion of a table entry (route information) newly added is reported to other transmission equipment each having the same function as that of the transmission equipment, so that the stored contents on communication paths sharing the contents can rapidly be unified.

Further as an ARP request frame is broadcast to all external ports before a period of time measured by the aging timer 18a reaches a prespecified period of time, an ARP can positively be demanded to all the external ports before a newly added table entry (route information) is deleted. With this feature, deletion of a table entry (route information) which should be preserved can be prevented.

In a case where a table entry (route information) relating to a transmitting IP address included in a received ARP frame has been registered in the host route registration table 21, contents of the entry is updated according to change in connective relation between a transmission equipment and a terminal (peripheral device) under direct control thereby is updated, and the updated contents is reported to other transmission equipment each having the same function as that of the transmission equipment. For instance, when a peripheral device is put under direct control by other transmission equipment, it goes out of control by a previously-controlling transmission equipment, so that it is required to delete the route information from the stored contents, or to change route information if a connecting position (port position) is changed in the transmission equipment. With this feature, it becomes possible to realize automatic fetching and automatic updating of a host route with an ARP frame.

The present invention was described above with reference to Embodiments 1 and 2, but various modifications can be made within a gist of the present invention, and the modifications can not be excluded from a scope of the present invention.

With the transmission equipment according to the present invention, when transmission of a frame including destination information is relayed between a plurality of networks, route information corresponding to destination information included in a frame received from each network from stored route information is selected, and the received frame is relayed an transmitted according to the route information, so that the frame is transmissively relayed without the necessity to rewrite the entire frame and also a route can be confirmed only by checking the destination, and for this reason there is provided the advantage that it is possible to obtain a transmission equipment which can realize excellent cost performance of the entire apparatus without being restricted by the conventional type of transmitting technology based on OSI layer.

With the transmission equipment according to the present invention, when transmission of a frame based on a common frame format and including destination information is relayed between a plurality of networks, control data transacted between transmission equipment and between a transmission equipment and a peripheral device is recognized according to a frame received from each peripheral device as well as each network: correspondence between destination information and route information on each network is compiled and stored according to the control data; route information corresponding to destination information included in a frame received from each network is selected from the stored route information; and the received frame is relayed and transmitted as it is according to the route information, so that a frame can transmissively be relayed without being degraded and also information for routing can be fetched from the frame, and for this reason there is provided the advantage that it is possible to obtain a transmission equipment which can easily compile information for routing.

With the transmission equipment according to the present invention, when transmission of a frame including a destination information is relayed between a plurality of networks, a routing protocol is recognized according to a frame received from each network; destination information on each network is compiled and stored in correspondence to route information according to the routing protocol; route information corresponding to the destination information included in the frame received from each network and including destination information is selected from the stored route information; and the received frame including destination information is relayed and transmitted as it is according to the route information, so that a frame can transmissively be relayed without causing degradation and information for routing can be fetched from the frame, and for this reason there is provided the advantage that it is possible to obtain a transmission equipment which can easily compile information for routing.

With the transmission equipment according to the present invention, when transmission of a frame based on a common frame format and also including destination information is relayed between a plurality of networks, a transmitting IP address of a peripheral device is recognized according to a frame received from the peripheral device; destination information on each network is compiled and stored in correspondence to route information according to the transmitting IP address; route information corresponding to the destination information included in a frame received from each network is selected from the stored route information; and the received frame is relayed and transmitted as it is according to the route information, so that a frame can transmissively be relayed without causing degradation, and information for routing can be fetched from the frame, and for this reason there is provided the advantage that it is possible to obtain a transmission equipment which can easily compile information for routing.

With the transmission equipment according to the present invention, after route information relating to a transmitting IP address of a frame including a received ARP is added, when a frame including the ARP is received from a peripheral device according to the route information before a specified period of time passes, the measurement of time is stopped, and the added contents is deleted when the specified period of time has passed, so that a peripheral device not having been registered yet can be newly registered according to the ARP, and for this reason there is provided the advantage that it is possible to obtain a transmission equipment which can automatically fetch and update a host route with the ARP frame.

With the transmission equipment according to the present invention, addition or deletion of newly added route information is reported also to other transmission equipment each having functions equivalent to those of the transmission equipment, and for this reason there is provided the advantage that it is possible to obtain a transmission equipment which can accurately and rapidly unify stored contents on a shared communication route.

With the transmission equipment according to the present invention, a request type of frame including an ARP is sent to one or a plurality of peripheral devices before a measured time reaches a specified period of time, so that a frame including the ARP can actively be requested to a peripheral device before newly added route information is deleted, and for this reason there is provided the advantage that it is possible to obtain a transmission equipment which can prevent route information to be added from being deleted carelessly.

With the transmission equipment according to the present invention, when route information relating to a transmitting IP address of a received frame including the ARP has already been stored, the stored contents is updated according to change in connection between the transmission equipment and a peripheral device, and the updated contents is reported to other transmission equipment equivalent to the transmission equipment, so that, if, for instance, a peripheral device is under direct control by the other transmission equipment, the peripheral device is removed from objects for control by the transmission equipment, so that the route information may be deleted from the stored contents, or if a connecting position (port position) is changed in the transmission equipment, it is required only to change the route information, and for this reason there is provided the advantage that it is possible to obtain a transmission equipment which can automatically fetch and update a host route with an ARP frame.

With the transmission equipment according to the present invention, in the switch engine, when a frame including destination information is received from each network, route information corresponding to destination information included in a frame is retrieved from the first table in the processing unit, and when the route information is obtained, the received frame is relayed and transmitted as it is according to the route information; and in the management unit, if route information is not obtained in retrieval by the switch engine, retrieval for the route information is executed in the second table in the unit, and when the route information is obtained as a result of the retrieval, the route information is correlated to the destination information used in the retrieval and registered in the first table in the processing unit, so that, when required route information is obtained in the stage of retrieval using the first table, relay can be completed without causing the management unit to operate, and for this reason there is provided the advantage that it is possible to obtain a transmission equipment which can further improve cost performance of the entire apparatus.

With the transmission equipment according to the present invention, in the switch engine, when a frame including a routing protocol is received from each network, the routing protocol is recognized from the received frame, and in the management unit, the second table is compiled by the switch engine according to the recognized routing protocol, so that the first table is used only for the first route retrieval by the switch engine with work load to the processing unit reduced as much as possible, and transmissive relay of a frame is not delayed, and for this reason there is provided the advantage that it is possible to obtain a transmission equipment which can further improve cost performance of the entire apparatus.

With the transmission equipment according to the present invention, in the switch engine, when a frame including the ARP is received from a peripheral device connected to a transmission equipment, a transmitting IP address of the peripheral device is recognized from the received frame, and in the management unit, the second table is compiled according to the transmitting IP address recognized by the switch engine, so that the first table is used only for the first route retrieval by the switch engine with a work load to the processing unit reduced as much as possible, and transmissive relay of a frame is not delayed, and for this reason there is provided the advantage that it is possible to obtain a transmission equipment which can further improve cost performance of the entire apparatus.

With the network transmission system according to the present invention, when transmission of a frame including destination information is relayed between a plurality of networks, in one or a plurality of transmission equipments with a plurality of networks connected thereto, route information corresponding to destination information included in a frame received from each network and of a partner for frame transmission on the network indirectly connected to the transmission equipment is selected from the stored route information, and the received frame is relayed and transmitted according to the route information, so that a frame passing through a transmission equipment is transmissively relayed without the entire frame being rewritten, and also a route can be confirmed only by checking the destination, and for this reason there is provided the advantage that it is possible to obtain a network transmission system which can realize excellent cost performance of the entire system without being restricted by the conventional type of transmitting technology based on OSI layer.

With the network transmission system according to the present invention, when transmission of a frame based on a common frame format and including destination information is relayed between a plurality of networks, in the transmission equipment, a routing protocol is recognized according to a frame received from each network, destination information on each network is compiled and stored in correspondence to route information according to the routing protocol, route information corresponding to the destination information included in the frame received from each network and including destination information is selected from the stored route information, and the received frame including destination information is relayed and transmitted as it is according to the route information, so that a frame can transmissively be relayed without being degraded and also information for routing can be fetched from the frame, and for this reason, there is provided the advantage that it is possible to obtain a network transmission system in which a transmission equipment can easily compile information for routing in the system.

With the network transmission system according to the present invention, when relaying and transmitting a frame, if a routing protocol spontaneously sent from other transmission equipment is recognized from the received frame, the received frame is fetched, new destination information is generated, and the generated destination information is spontaneously sent to the other transmission equipment, and for this reason there is provided the advantage that it is possible to obtain a network transmission system in which information for routing in the system can easily be compiled relaying a routing protocol between transmission equipments.

With the network transmission system according to the present invention, when a frame based on a common frame format and including destination information is relayed between a plurality of networks, in the transmission equipment, a transmitting IP address of a peripheral device is recognized according to a frame received from a connected peripheral device, destination information on each network is compiled and stored in route information according to the transmitting IP address, and route information corresponding to destination information in the frame received from each network is selected from the stored route information, and the received data is relayed as it is according to the route information, so that a frame can transmissively be relayed without being degraded and information for routing can be fetched from the frame, and for this reason there is provided the advantage that it is possible to obtain a network transmission system in which information for routing in the system can easily be compiled in the transmission equipment.

With the transmitting method according to the present invention, when a frame including destination information is received from each network, route information corresponding to destination information in the frame is retrieved from the first table, and when the route information is obtained, the received frame is relayed and transmitted as it is from the route information, and on the other hand, when the route information is not obtained, the retrieval is executed in the second table, and when the route information is obtained as a result of this retrieval, the route information is registered in correspondence to the destination information used for retrieval in the first table, so that, when required route information is obtained in a stage of retrieval using the first table, the relaying operation can be finished in the stage, and with this feature the relaying operation is executed at a high speed, and for this reason there is provided the advantage that it is possible to obtain a transmitting method in which a transmission equipment can execute relay as a backbone without being restricted by the conventional type of transmitting technology based on OSI layer so that excellent cost performance of the entire apparatus can be realized.

This application is based on Japanese patent applications No. HEI 9-143842 and No. HEI 10-005718 filed in the Japanese Patent Office on June 2, 1997 and Januaryl4, 1998, respectively, the entire contents of which are hereby incorporated by reference.

Although the invention has been described with respect to a specific embodiment for a complete and clear disclosure, the appended claims are not to be thus limited but are to be construed as embodying all modifications and alternative constructions that may occur to one skilled in the art which fairly fall within the basic teaching herein set forth.

## Claims

1. A transmission equipment with a plurality of networks connected thereto for executing communications using a frame including destination information for relaying frame transmission between said plurality of networks comprising:
a route storing unit for storing therein route information in correspondence to destination information for a receiver for frame transmission on said networks connected to said transmission equipment;
a route selecting unit for selecting, when receiving a frame from each of said network, route information corresponding to destination information included in said received frame from route information stored in said route storing unit; and
a relaying transmitter for relaying and transmitting said received frame according to the route information selected by said route selecting unit.

2. A transmission equipment with one or a plurality of peripheral devices and a plurality of networks each for executing communications using a frame including destination information connected thereto for relaying frame transmission between said plurality of networks including said one or a plurality of peripheral devices, said transmission equipment comprising:
a route storing unit for storing therein route information in correspondence to destination information on each of said networks;
a compiling unit for recognizing, when a frame including control data transacted between transmission equipment and between a transmission equipment and a peripheral device is received from said one or said plurality of peripheral devices as well as from said plurality of networks, the control data from said received frame and compiling contents to be stored in said route storing unit according to said recognized control data;
a route selecting unit for selecting route information corresponding to the route information included in said received frame including destination information from the route information stored in said route storing unit; and
a relaying transmitter for relaying and transmitting said received frame including destination information as it is according to the route information selected by said route selecting unit.

3. A transmission equipment with a plurality of networks connected thereto for executing communications using a frame including destination information for relaying frame transmission between said plurality of networks comprising:
a route storing unit for storing therein route information in correspondence to destination information on each of said networks;
a compiling unit for recognizing, when a frame including a routing protocol is received from each of said network, the routing protocol from said received frame and compiling contents to be stored in said route storing unit according to said recognized routing protocol;
a route selecting unit for selecting route information corresponding to destination information included in said received frame including destination information from the route information stored in said route storing unit; and
a relaying transmitter for relaying and transmitting said received frame including destination information according to said route information selected by the route selecting unit.

4. A transmission equipment with one or a plurality of peripheral devices and a plurality of networks each for executing communications using a frame including destination information connected thereto for relaying frame transmission between the plurality of networks including said one or said plurality of peripheral devices, said transmission equipment comprising:
a route storing unit for storing therein route information in correspondence to destination information on each of said networks;
a compiling unit for recognizing, when a frame including ARP is received from said peripheral device, an transmitting IP address of a peripheral device from said received frame and compiling contents to be stored in said route storing unit according to said recognized transmitting IP address for the peripheral device;
a route selecting unit for selecting route information corresponding to the destination information included in said received frame including destination information from the route information stored in said route storing unit; and
a relaying transmitter for relaying and transmitting said received frame including destination information according to the route information selected by said route selecting unit.

5. A transmission equipment according to claim 4; wherein said compiling unit comprises:
an adding unit for adding, when route information relating to said recognized transmitting IP address is not stored in said route storing unit, said route information to said route storing unit;
a measuring unit for measuring passage of a certain period of time in response to an adding operation of said adding unit; and
an adding/deleting unit for stopping, when a frame including an ARP is received from said peripheral device according to said route information before said certain period of time measured by said measuring unit has passed, measurement by said measuring unit, and also for deleting, when it is measured by said measuring unit that said certain period of time has passed, contents added by the adding unit from said route storing unit.

6. A transmission equipment according to claim 5; wherein one or a plurality of other transmission equipment each equivalent to the transmission equipment are included in said plurality of networks, and the compiling unit reports a result of addition by said adding unit and contents deleted by said adding/deleting unit to said other transmission equipment or apparatuses.

7. A transmission equipment according to claim 5; wherein said compiling unit sends a request type of frame including an ARP to said one or said plurality of peripheral devices before a time measured by the measuring unit reaches said certain period of time.

8. A transmission equipment according to claim 4; wherein one or a plurality of other transmission equipment each equivalent to the transmission equipment are included in said plurality of networks, and said compiling unit updates, when route information relating to said recognized transmitting IP address is stored in said route storing unit, contents stored in said route storing unit according to a change of connection between the transmission equipment and said peripheral device based on said route information, and also reporting contents of updating to said other transmission equipment or apparatuses.

9. A transmission equipment with executing communications using a frame including destination information for relaying frame transmission between said plurality of networks comprising:
a switch engine for controlling a destination of said frame;
a processing unit having a first table storing therein destination information on each of said networks in correspondence to a route information for a destination indicated by said destination information for receiving destination information from said switch engine by using said first table and also supplying route information corresponding to said destination information to said switch engine; and
a management unit having a second table storing therein destination information on each of said networks in correspondence to a route for a destination indicated by said destination information; wherein said switch engine comprises:
an extracting unit for extracting destination information from said received frame when said frame is received from said networks;
a first retrieving unit for retrieving route information corresponding to destination information extracted by said extracting unit from the route information stored in said first table; and
a relaying transmitter for relaying and transmitting, when route information is obtained by said first retrieving unit, said received frame as it is according said route information; wherein said management unit comprises:
a second retrieving unit for retrieving, when route information is not obtained from said first retrieving unit, route information corresponding to the destination information extracted by said extracting unit from the route information stored in said second table in response to a request from said processing unit; and
a registering unit for registering, when route information is obtained by said second retrieving unit, the route information in correspondence to the destination information extracted by said extracting unit.

10. A transmission equipment according to claim 9; wherein said switch engine comprises a recognizing unit for recognizing, when the frame including a routing protocol is received from the networks, the routing protocol from the received frame; and said management unit comprises a compiling unit for compiling said second table according to the routing protocol recognized by said switch engine.

11. A transmission equipment according to claim 9; wherein said transmission equipment has one or a plurality of peripheral devices connected thereto, said switch engine comprises a recognizing unit for recognizing, when said frame including an ARP is received from said peripheral device, a transmitting IP address for said peripheral device from said received frame, and said management unit comprises a compiling unit for compiling said second table according to the recognized transmitting IP address for peripheral device by said switch engine.

12. A network transmission system comprising:
a plurality of networks each for executing communications using a frame including destination information,
one or a plurality of transmission equipments with said plurality of networks connected thereto for relaying frame transmission between said plurality of networks; wherein said transmission equipment comprises:
a route storing unit for storing therein route information in correspondence to destination information for a receiver of frame transmission on said network connected to said transmission equipment;
a route selecting unit for selecting, when said frame is received from said networks, route information corresponding to the destination information included in said received frame from the route information stored in said route information storing unit; and
a relaying transmitter for relaying and transmitting said received frame according to the route information selected by said route selecting unit.

13. A network transmission system according to claim 12; wherein said table compiling unit compiles, when the routing protocol recognized from said received frame is a routing protocol spontaneously sent from other transmission equipment to said networks, contents to be stored in said route storing unit according to said routing protocol included in said received frame.

14. A relaying network system comprising:
a plurality of networks each for executing communications using a frame including destination information; and
one or a plurality of transmission equipment with a plurality of networks connected thereto each for relaying frame transmission between said plurality of networks; wherein said transmission equipment comprises:
a route storing unit for storing therein route information in correspondence to destination information on said networks;
a table compiling unit for recognizing, when said frame including a routing protocol is received from said networks, the routing protocol from said received frame and compiling contents to be stored in said route storing unit according to said recognized routing protocol;
a route selecting unit for selecting route information corresponding to the destination information included in said received frame including destination information from the route information stored in said route storing unit; and
a relaying transmitter for relaying and transmitting said received frame including destination information as it is according to the route information selected by said route selecting unit within said plurality of networks.

15. A network transmission system according to claim 14; wherein said table compiling unit compiles, when the routing protocol recognized from said received frame is a routing protocol spontaneously sent from other transmission equipment to said networks, contents to be stored in said route storing unit according to said routing protocol included in said received frame.

16. A network transmission system comprising:
a plurality of networks each for executing communications using a frame including destination information; and
one or a plurality of transmission equipments with one or a plurality of peripheral devices and said plurality of networks connected thereto each for relaying frame transmission between said plurality of networks including said one or said plurality of peripheral devices; wherein said transmission equipment comprises:
a route storing unit for storing therein route information in correspondence to destination information on said networks;
a table compiling unit for recognizing, when said frame including an ARP is received from said peripheral device, a transmitting IP address for said peripheral device from said received frame, and compiling contents to be stored in said route storing unit according to the transmitting IP address of said recognized peripheral device;
a route selecting unit for selecting route information corresponding to the destination information included in said received frame including destination information from the route information stored in said route storing unit; and
a relaying transmitter for relaying and transmitting said received frame including destination information according to the route information selected by said route selecting unit within said plurality of networks.

17. A transmitting method for connecting a plurality of networks each for executing communications using a frame including destination information and relaying frame transmission between said plurality of networks comprising:
a first step for extracting, when said frame is received from said networks, destination information from said received frame;
a second step of retrieving, by using the first table in which destination information on said networks is stored in correspondence to route information indicating a route for the destination indicated by the destination information, route information corresponding to the destination information extracted in said first step from the route information stored in said first table;
a third step of relaying and transmitting, when route information is obtained in said second step, said received frame as it is according to the route information;
a fourth step of retrieving, by using the second table provided separately from said first table in which the destination information on said networks is stored in correspondence to the route information indicating a route for the destination indicated by the destination information, when route information is not obtained in said second step, route information corresponding to the destination information extracted in said first step from the route information stored in said second table; and
a fifth data of registering, when route information is obtained in said fourth step, the route information in said first table in correspondence to the destination information extracted in said first step.
